(19) Europäisches Patentamt
European Patent Office
Office européen des brevets

(11) **EP 3 577 520 B1**

(12) **FASCICULE DE BREVET EUROPEEN**

(45) Date de publication et mention de la délivrance du brevet:
**17.04.2024 Bulletin 2024/16**

(21) Numéro de dépôt: **18705430.9**

(22) Date de dépôt: **29.01.2018**

(51) Classification Internationale des Brevets (IPC):
**G03B 21/62** (2014.01)    **B32B 7/02** (2019.01)
**B32B 17/06** (2006.01)    **G02B 5/02** (2006.01)
**G03B 21/60** (2014.01)

(52) Classification Coopérative des Brevets (CPC):
**G03B 21/62; B32B 7/12; B32B 9/045; B32B 17/06; B32B 17/10036; B32B 17/10174; B32B 17/10761; B32B 27/06; B32B 27/08; B32B 27/281; B32B 27/304; B32B 27/308; B32B 27/322; B32B 27/34; B32B 27/36;** (Cont.)

(86) Numéro de dépôt international:
**PCT/FR2018/050192**

(87) Numéro de publication internationale:
**WO 2018/142050 (09.08.2018 Gazette 2018/32)**

(54) **ÉLÉMENT EN COUCHES TRANSPARENT A RÉFLEXION DIFFUSE DIRECTIONNELLE**

AUS TRANSPARENTEN SCHICHTEN GEFERTIGTES, GESCHICHTETES ELEMENT MIT BEREITSTELLUNG VON DIREKTIONALER DIFFUSER REFLEKTION

LAYERED ELEMENT MADE OF TRANSPARENT LAYERS PROVIDING DIRECTIONAL DIFFUSE REFLECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **31.01.2017 FR 1750796**

(43) Date de publication de la demande:
**11.12.2019 Bulletin 2019/50**

(73) Titulaire: **SAINT-GOBAIN GLASS FRANCE**
**92400 Courbevoie (FR)**

(72) Inventeurs:
• **SCHIAVONI, Michele**
**75014 Paris (FR)**
• **OZANAM, Cécile**
**91120 Palaiseau (FR)**
• **GAYOUT, Patrick**
**93250 Villemonble (FR)**

(74) Mandataire: **Saint-Gobain Recherche**
**B.P. 135**
**39, quai Lucien Lefranc**
**93303 Aubervilliers Cedex (FR)**

(56) Documents cités:
**WO-A1-2013/175129    US-A1- 2009 316 262**
**US-A1- 2011 310 487**

(52) Classification Coopérative des Brevets (CPC):
(Cont.)
**B32B 27/365; B32B 27/40; G02B 5/0221;
G03B 21/60;** B32B 2255/10; B32B 2307/546;
B32B 2419/00; B32B 2605/006

## Description

### DOMAINE TECHNIQUE DE L'INVENTION

Le domaine technique de l'invention est celui des vitrages transparents comprenant un élément en couches transparent à propriétés de réflexion diffuse. De tels vitrages transparents peuvent servir d'écran de projection et trouvent application, notamment, dans le domaine du bâtiment ou dans le domaine des transports, par exemple pour la réalisation de vitrages d'avions, de trains, de véhicules automobiles (voitures, camions, etc.), en particulier des pare-brises, vitrages latéraux ou vitrages de toit.

### ARRIERE-PLAN TECHNOLOGIQUE DE L'INVENTION

Les vitrages connus comprennent les vitrages transparents standards, qui donnent lieu à une transmission et une réflexion spéculaires d'un rayonnement incident sur le vitrage, et les vitrages translucides, qui donnent lieu à une transmission et une réflexion diffuses d'un rayonnement incident sur le vitrage.

De manière usuelle, la réflexion par un vitrage est dite diffuse lorsqu'un rayonnement incident sur le vitrage avec un angle d'incidence donné est réfléchi par le vitrage dans une pluralité de directions. La réflexion par un vitrage est dite spéculaire lorsqu'un rayonnement incident sur le vitrage avec un angle d'incidence donné est réfléchi par le vitrage avec un angle de réflexion égal à l'angle d'incidence. De manière analogue, la transmission à travers un vitrage est dite spéculaire lorsqu'un rayonnement incident sur le vitrage avec un angle d'incidence donné est transmis par le vitrage avec un angle de transmission égal à l'angle d'incidence.

Un écran de projection comporte deux faces ou surfaces principales, à savoir une première face qui est positionnée dans la même région de l'espace que la source lumineuse et sur laquelle est projetée l'image provenant de la source lumineuse (projection directe) et une deuxième face opposée sur laquelle apparaît éventuellement par transparence l'image projetée sur la première face.

Un écran de rétroprojection dispose d'une première face et d'une deuxième face opposée possédant les mêmes caractéristiques que celles des écrans de projection précédemment mentionnés. En revanche, un écran de rétroprojection se différencie d'un écran de projection par le fait que l'utilisateur et la source lumineuse ne sont pas situés dans la même région de l'espace mais se trouvent de part et d'autre de l'écran. La rétroprojection implique de placer le projecteur derrière le vitrage.

Dans ce qui suit, sauf précision contraire, le terme "projection" est utilisé de manière générale pour désigner à la fois la projection et la rétroprojection.

L'utilisation de vitrages standards transparents en tant qu'écrans de projection n'est pas envisageable. En effet, ces vitrages ne présentent pas de propriétés de réflexion diffuse, ils ne permettent donc pas de former des images sur l'une quelconque de leurs faces et renvoient des reflets nets à la manière de miroirs.

De nombreuses tentatives ont été réalisées pour conférer à des vitrages standards transparents des propriétés supplémentaires permettant leur utilisation comme écran de projection, tout en maintenant une vision nette à travers le vitrage.

WO 2013/175129 A1 décrit un vitrage comprenant un élément en couches transparent à propriétés de réflexion diffuse permettant la projection d'images, avec un grand angle de vue, tout en maintenant la transparence du vitrage. Un rayonnement incident sur l'élément en couches est réfléchi de manière diffuse et transmis de manière spéculaire par l'élément en couches.

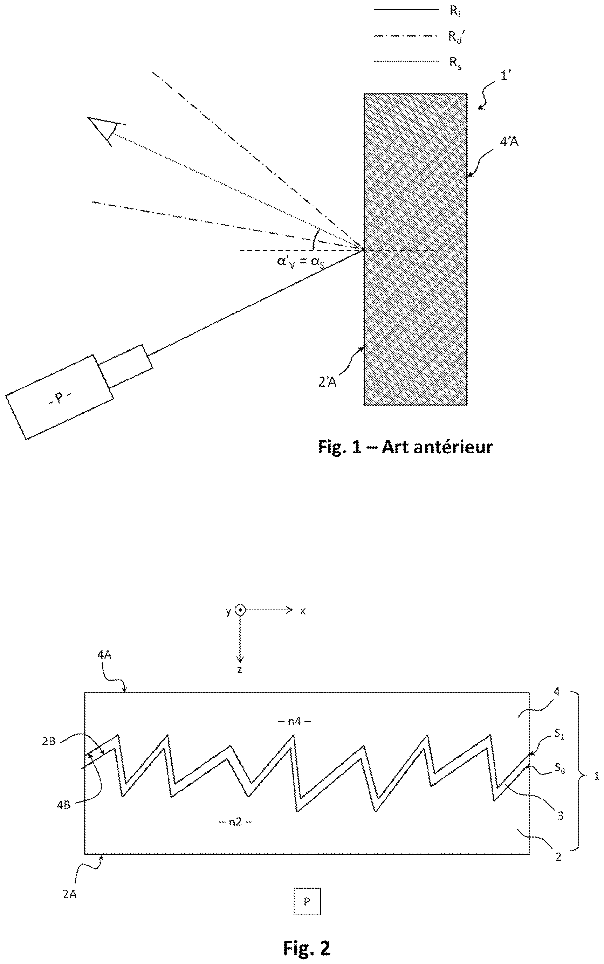

Pour un rayonnement incident donné sur l'élément en couches selon le document WO 2013/175129 A1, plus l'angle d'observation d'un observateur est éloigné de l'angle de réflexion spéculaire, plus la luminosité d'une image projetée diminue pour l'observateur. Le meilleur angle d'observation pour un observateur est donc celui qui correspond à la réflexion spéculaire. Toutefois, tout rayonnement incident sur une surface externe lisse de l'élément en couches n'est pas entièrement transmis et donne également lieu à une réflexion spéculaire qui peut s'avérer éblouissante pour l'observateur. Ce phénomène est schématiquement représenté à la figure 1 : un projecteur P émet un rayonnement incident dans une direction $R_i$. Une première partie du rayonnement incident est transmise par une surface externe lisse 2'A de l'élément en couches 1', puis est réfléchie de manière diffuse, dans une pluralité de directions $R_d$', par une couche centrale de l'élément en couches (non représentée sur la figure 1). Une deuxième partie du rayonnement incident est réfléchie par la surface externe lisse 2'A de manière spéculaire, à la manière d'un miroir, dans une direction $R_s$. La pluralité de directions $R_d$' est centrée autour de la direction $R_s$ de réflexion spéculaire : l'angle d'observation $\alpha_v$' d'un observateur idéalement positionné pour observer une image projetée est égal à l'angle $\alpha_s$ de réflexion spéculaire, et l'observateur ainsi positionné est donc susceptible d'être gêné par un reflet indésirable.

Une manière de minimiser ce phénomène est d'avoir une luminosité qui varie le moins possible en angle, ce qui revient à avoir une ouverture angulaire de la réflexion diffuse la plus grande possible. Mais augmenter l'ouverture angulaire de la réflexion diffuse à luminance du projecteur égale revient à répartir une même quantité de lumière sur un angle plus grand, donc à diminuer la luminosité en chaque point du vitrage utilisé comme écran. Alternativement ou en complément, le dépôt d'une couche antireflet est possible mais il ne permet pas de supprimer complètement la réflexion spéculaire.

C'est notamment à ces inconvénients que la présente invention entend remédier, en proposant un élément en couches transparent et un vitrage transparent permettant la projection d'images avec une bonne résolution, une luminosité importante et un risque limité d'éblouissement pour un observateur, tout en maintenant une vision nette à travers le vitrage.

Un autre document de l'art antérieur est le document US 2011/0310487, qui décrit un élément transparent en couches destiné à être utilisé pour réduire l'effet de la réflexion spéculaire de la lumière du soleil sur le vitrage d'un bâtiment ("heat-island phenomenon").

## RESUME DE L'INVENTION

A cet effet, l'invention a pour objet un élément en couches transparent selon la revendication 1.

Selon l'invention, l'évolution angulaire de la réflexion lumineuse diffuse RLdifif de l'élément en couches du côté d'une couche externe est avantageusement déterminée en mesurant la BRDF ("Bidirectionnal Réflectance Distribution Function") de l'élément en couches du côté de ladite couche externe. De manière connue, la BRDF est le rapport entre la luminance en réflexion de l'élément en couches du côté de ladite couche externe dans la direction $(\theta', \varphi')$ et son éclairement lorsque celui-ci provient d'un éclairage collimaté en fonction de la direction d'incidence $(\theta, \varphi)$ :

$$\mathrm{BRDF}(\lambda, \theta, \varphi, \theta', \varphi') = \frac{\mathrm{L}(\lambda, \theta', \varphi')}{\mathrm{E}(\lambda, \theta, \varphi)},$$

ce qui peut également s'exprimer par :

$$BRDF(\lambda, \theta, \varphi, \theta', \varphi') = \frac{L(\lambda, \theta', \varphi')}{\pi * Ldiffuseur\_parfait(\lambda)}.$$

Dans le cadre de l'invention, la BRDF est mesurée à l'aide d'un goniophotomètre tel qu'un banc REFLET-90 ou REFLET-180 de la société STIL.

Grâce à l'invention, la réflexion diffuse de l'élément en couches est définie par une pluralité de directions de réflexion qui est centrée autour d'au moins une direction préférentielle distincte de la direction de réflexion spéculaire. Ainsi, le ou chaque meilleur angle d'observation pour l'observateur, c'est-à-dire l'angle d'observation lui permettant d'observer une image projetée avec une luminosité maximale, est dissocié de la direction de réflexion spéculaire. Le risque d'éblouissement par réflexion spéculaire est donc diminué voire supprimé. Cette réflexion diffuse directionnelle, combinée à la transparence en transmission de l'élément en couches transparent, permet d'obtenir une bonne luminosité des images projetées. De manière avantageuse, dans des situations où l'angle de vue est faible, il est possible de concentrer le rayonnement réfléchi de manière diffuse par l'élément en couches dans des directions privilégiées, en sélectionnant une texture appropriée pour chaque surface de contact texturée de l'élément en couches, conformément à l'invention.

De plus, le fait que la texture de chaque surface de contact texturée au sein de chaque pixel présente une distribution des pentes ayant un coefficient de corrélation important avec la distribution des pentes de la texture de la surface de contact texturée totale, garantit que chaque pixel est suffisamment représentatif de la texture de la surface de contact totale, c'est-à-dire de la distribution des pentes de la texture de chaque surface de contact texturée de l'élément en couches, pour assurer une résolution satisfaisante lorsque l'élément en couches ou un vitrage l'incorporant est utilisé comme écran de projection.

Il est à noter que la nécessité d'une résolution suffisante est particulièrement importante dans le cas d'un élément en couches selon l'invention, qui présente une réflexion diffuse directionnelle, afin que toute la surface de l'élément en couches ou d'un vitrage l'incorporant assure de manière homogène la redirection du rayonnement selon la ou les directions privilégiées correspondant aux angles d'observation privilégiés.

Selon un aspect de l'invention, l'élément en couches est destiné à être utilisé par un observateur en s'étendant sensiblement parallèlement à un plan Oxy d'un référentiel (O, x, y, z), où l'axe Ox est selon une direction horizontale et l'axe Oy est selon une direction verticale pour l'observateur, la texture de chacune desdites surfaces de contact texturées entre deux couches adjacentes de l'élément en couches où l'une des deux couches est une couche métallique, ou qui sont deux couches transparentes d'indices de réfraction différents, étant d'équation z = f(x, y) et présentant, en chaque

point de coordonnées $(X_0, Y_0)$ de la surface de contact, une première pente directionnelle $\theta_x$ et une deuxième pente

$$\theta_x(X_0, Y_0) = \arctan \frac{dz}{dx}\Big|_{X_0,Y_0} \quad \text{et } \theta_y(X_0,Y_0) = \arctan \frac{dz}{dy}\Big|_{X_0,Y_0}$$

directionnelle $\theta_y$ telles que : , et la distribution des pentes de la texture de chacune desdites surfaces de contact texturées, qui correspond à la fréquence de chaque couple de pentes $(\theta_x, \theta_y)$, ne présentant pas de symétrie axiale selon au moins l'un des axes $(O\theta_x, O\theta_y)$ d'un premier repère orthogonal $(O, \theta_x, \theta_y)$, où O correspond au couple de pentes $(0, 0)$, ou ne présentant pas de symétrie axiale selon au moins l'un des axes $(O\theta_x', O\theta_y')$ d'un deuxième repère orthogonal $(O, \theta_x', \theta_y')$ obtenu par rotation de 45° du premier repère orthogonal $(O, \theta_x, \theta_y)$.

Dans le cadre de l'invention, on distingue :

- d'une part, les couches métalliques, pour lesquelles la valeur de l'indice de réfraction est indifférente, et
- d'autre part, les couches transparentes, notamment diélectriques, pour lesquelles la différence d'indice de réfraction par rapport à celui des couches externes est à considérer.

On entend par matériau ou couche diélectrique un matériau ou une couche de conductivité électrique faible, inférieure à 100 S/m.

Chaque couche externe de l'élément en couches peut être formée par un empilement de couches, pour autant que les différentes couches constitutives de la couche externe soient constituées en des matériaux transparents, notamment diélectriques, ayant tous sensiblement le même indice de réfraction.

La couche centrale de l'élément en couches peut être formée par une couche unique qui est une couche transparente, notamment diélectrique, d'indice de réfraction différent de celui des couches externes ou une couche métallique. En variante, la couche centrale de l'élément en couches peut être formée par un empilement de couches qui comprend au moins une couche transparente, notamment diélectrique, d'indice de réfraction différent de celui des couches externes ou une couche métallique.

De manière avantageuse, pour obtenir les propriétés de réflexion diffuse et transmission spéculaire de l'élément en couches, toutes les surfaces de contact entre deux couches adjacentes de l'élément en couches dont l'une est une couche transparente, notamment diélectrique, et l'autre est une couche métallique, ou qui sont deux couches transparentes, notamment diélectriques, d'indices de réfraction différents, sont texturées et parallèles entre elles.

La réflexion diffuse de chaque côté de l'élément en couches provient de ce que chaque surface de contact entre deux couches adjacentes de l'élément en couches dont l'une est une couche transparente, notamment diélectrique, et l'autre est une couche métallique, ou qui sont deux couches transparentes, notamment diélectriques, d'indices de réfraction différents, est texturée. Ainsi, lorsqu'un rayonnement incident sur l'élément en couches, de l'un ou l'autre côté de celui-ci, atteint une telle surface de contact, il est réfléchi par la couche métallique ou du fait de la différence d'indice de réfraction entre les deux couches transparentes et, comme la surface de contact est texturée, la réflexion est diffuse.

La transmission spéculaire à travers l'élément en couches provient quant à elle de ce que les deux couches externes ont des surfaces principales externes lisses et sont constituées en des matériaux ayant sensiblement le même indice de réfraction, et de ce que toutes les surfaces de contact entre deux couches adjacentes de l'élément en couches dont l'une est une couche transparente, notamment diélectrique, et l'autre est une couche métallique, ou qui sont deux couches transparentes, notamment diélectriques, d'indices de réfraction différents, sont texturées et parallèles entre elles.

Au sens de l'invention, deux matériaux transparents, notamment diélectriques, ont sensiblement le même indice de réfraction, ou ont leurs indices de réfraction sensiblement égaux, lorsque la valeur absolue de la différence entre leurs indices de réfraction à 550 nm est inférieure ou égale à 0,15. De préférence, la valeur absolue de la différence d'indice de réfraction à 550 nm entre les matériaux constitutifs des deux couches externes de l'élément en couches est inférieure à 0,05, encore de préférence inférieure à 0,015. Au sens de l'invention, deux couches transparentes, notamment diélectriques, ont des indices de réfraction différents lorsque la valeur absolue de la différence entre leurs indices de réfraction à 550 nm est strictement supérieure à 0,15.

Dans la suite de cette description, on fait référence aux pentes de la texture de chaque surface de contact texturée de l'élément en couches qui est située entre deux couches adjacentes dont l'une est une couche transparente, notamment diélectrique, et l'autre est une couche métallique, ou entre deux couches adjacentes qui sont deux couches transparentes, notamment diélectriques, d'indices de réfraction différents. Dans la mesure où toutes les surfaces de contact texturées de l'élément en couches sont parallèles entre elles, il existe un unique profil de texture et une unique distribution des pentes valables pour toutes ces surfaces de contact texturées.

Dans le cadre de l'invention, la distribution des pentes de la texture de chaque surface de contact texturée est déterminée en réalisant les étapes suivantes :

- mesure du profil z = f(x, y) de la texture d'une desdites surfaces de contact texturées (la mesure d'une seule surface suffit, puisqu'elle est représentative de toutes les surfaces de contact texturées), par exemple la surface de la couche centrale, à l'aide d'un profilomètre MICROMESURE 2 de la société STIL, sur une surface de 1 mm × 1 mm, avec un pas d'échantillonnage de 1 μm × 1 μm ;

- calcul des première et deuxième pentes directionnelles $\theta_x(X_0, Y_0) = \arctan \frac{dz}{dx}\Big|_{X_0,Y_0}$ et

$\theta_y(X_0, Y_0) = \arctan \frac{dz}{dy}\Big|_{X_0,Y_0}$ en chaque point de la surface, où $\frac{dz}{dx}$ et $\frac{dz}{dy}$ sont les dérivées partielles de l'altitude calculées avec le filtre de Sobel.

Pour les mesures de profils de textures réalisées à l'aide du profilomètre MICROMESURE 2 de la société STIL, les conditions de mesure sont les suivantes. La tête de mesure est constituée d'une lentille chromatique associée à un "magnifier" ayant les caractéristiques : ouverture numérique de 0,42 ; angle de mesure maximum de 25° ; résolution en Z de 0,04 microns ; résolution latérale de 4,5 microns. L'extraction des profils de textures est réalisée avec un filtrage gaussien passe-bas ayant une longueur de coupure de 19 microns (qui filtre les microrugosités).

Dans cette demande, des critères sont donnés pour la distribution des pentes de la texture de chaque surface de contact texturée, étant entendu qu'il est possible d'établir des critères correspondants pour la distribution angulaire de la réflexion diffuse de l'élément en couches. En effet, il existe un lien entre la pente locale et la direction de réflexion de la lumière, localement.

En particulier, en reprenant les notations de la figure 1 (sans les « ' »), un rayon lumineux sous incidence normale par rapport à la surface principale externe 2A d'une couche externe de l'élément en couches est réfléchi sur une facette de pente θ de la surface de contact texturée avec un angle $\alpha_v$ donné par la relation : n2 sin(2θ) = sin $\alpha_v$, soit $\alpha_v$ = arcsin(n2 sin(2θ)). De manière analogue, un rayon lumineux incident avec un angle -$\alpha_s$ (opposé de l'angle de réflexion spéculaire) sur la surface principale externe 2A d'une couche externe de l'élément en couche est réfléchi sur une facette de pente θ de la surface de contact texturée avec un angle $\alpha_v$ donné par la relation : n2 sin($\alpha'_s$+2θ) = sin $\alpha_v$

et sin $\alpha_s$ = n2 sin $\alpha'_s$, soit $\alpha_v = \arcsin\left(n2 \sin\left[\arcsin\left(\frac{\sin \alpha_s}{n2}\right) + 2\theta\right]\right)$. Il est à noter que ces équations sont vraies tant qu'il n'y a pas de réflexion totale interne à l'interface entre la couche externe de l'élément en couches et l'air, c'est-à-dire tant que 2θ ou $\alpha'_s$+2θ (selon le cas) reste inférieur à arcsin(1/n2).

La surface texturée à l'origine de la réflexion diffuse n'est pas composée d'une facette de pente unique mais d'une pluralité de facettes avec des pentes différentes, de sorte qu'à chaque couple de pentes ($\theta_x$, $\theta_y$) est associé un couple d'angles de réflexion ($\alpha_{vx}$, $\alpha_{vy}$) obtenu en remplaçant θ par $\theta_x$ ou $\theta_y$ dans les formules ci-dessus. La proportion de lumière réfléchie dans la direction ($\alpha_{vx}$, $\alpha_{vy}$) est alors reliée à la proportion de pentes ($\theta_x$, $\theta_y$). La distribution angulaire de la réflexion diffuse est donc obtenue en transformant les axes ($O\theta_x$, $O\theta_y$) en axes ($O\alpha_{vx}$, $O\alpha_{vy}$) selon la formule adéquate. Par exemple, dans le cas d'un projecteur situé en face de l'élément en couches et n2 = 1,51, les graduations 5, 10, 15° des axes ($O\theta_x$, $O\theta_y$) vont devenir les graduations 15,2, 31,1 et 49° pour les axes ($O\alpha_{vx}$, $O\alpha_{vy}$), ce qui va dilater de manière non linéaire la distribution dans les deux directions. Toutefois, même si la dilatation est non linéaire, le passage entre des critères pour la distribution des pentes et des critères correspondants pour la distribution angulaire de la réflexion diffuse est bien valable car, d'une part, la relation entre ($\theta_x$, $\theta_y$) et ($\alpha_{vx}$, $\alpha_{vy}$) peut être linéarisée aux petits angles et, d'autre part, le passage de ($\theta_x$, $\theta_y$) à ($\alpha_{vx}$, $\alpha_{vy}$) est une fonction croissante de sorte que, même si quelques rapports sont légèrement modifiés, l'aspect global de la distribution n'est pas modifié (même nombre de pics de la distribution, avec des positions relatives comparables). On note que dans le cas où le projecteur n'est pas situé en face de l'élément en couches (incidence non nulle), le pic en O est décalé dans la direction de la réflexion spéculaire.

Dans le cadre de l'invention, on utilise les définitions suivantes :

- Un élément transparent est un élément à travers lequel il y a une transmission de rayonnement au moins dans les domaines de longueurs d'onde utiles pour l'application visée de l'élément. A titre d'exemple, lorsque l'élément est utilisé en tant que vitrage de bâtiment ou de véhicule, il est transparent au moins dans le domaine de longueurs d'onde du visible.
- Un vitrage transparent est un substrat transparent rigide, organique ou minéral.
- Une surface lisse est une surface pour laquelle les irrégularités de surface sont de dimensions inférieures à la longueur d'onde du rayonnement incident sur la surface, de sorte que le rayonnement n'est pas dévié par ces irrégularités de surface. Le rayonnement incident est alors transmis et réfléchi de manière spéculaire par la surface.
- Une surface texturée est une surface pour laquelle les propriétés de surface varient à une échelle plus grande que la longueur d'onde du rayonnement incident sur la surface. Le rayonnement incident est alors transmis et réfléchi de manière diffuse par la surface.

L'élément en couches transparent permet d'obtenir une transmission spéculaire et une réflexion diffuse d'un rayonnement incident sur l'élément en couches du côté de l'une ou l'autre de ses couches externes. La couche centrale de l'élément en couches transparent favorise la réflexion diffuse, ce qui permet la projection directe d'une image sur l'un quelconque des côtés de l'élément en couches transparent, et d'un vitrage transparent l'incorporant, l'image se formant au niveau de la couche centrale.

Selon un aspect de l'invention, la distribution des pentes de la texture de chaque surface de contact texturée de l'élément en couches, qui correspond à la fréquence de chaque couple de pentes $(\theta_x, \theta_y)$, ne présente pas de symétrie axiale selon au moins l'un des axes d'un repère orthogonal centré en O.

Dans un mode de réalisation, la distribution des pentes de la texture de chaque surface de contact texturée de l'élément en couches, qui correspond à la fréquence de chaque couple de pentes $(\theta_x, \theta_y)$, présente, en dehors d'un éventuel pic centré en O, un unique pic non centré en O.

Dans un autre mode de réalisation, la distribution des pentes de la texture de chaque surface de contact texturée de l'élément en couches, qui correspond à la fréquence de chaque couple de pentes $(\theta_x, \theta_y)$, présente, en dehors d'un éventuel pic centré en O, au moins deux pics non centrés en O. Selon une réalisation particulière, tous les pics de la distribution des pentes peuvent alors être alignés le long d'un seul axe d'un repère orthogonal centré en O. En variante, la distribution des pentes peut présenter deux pics symétriques l'un de l'autre par rapport à l'un des axes d'un repère orthogonal centré en O.

Selon une caractéristique, la distribution des pentes de la texture de chaque surface de contact texturée de l'élément en couches, qui correspond à la fréquence de chaque couple de pentes $(\theta_x, \theta_y)$, présente, en dehors d'un éventuel pic centré en O, au moins un pic non centré en O pour lequel le rapport d'aspect, qui est un rapport entre la largeur du pic selon l'axe $O\theta_x$ et la largeur du pic selon l'axe $O\theta y$, est différent de 1. Le choix d'une valeur du rapport d'aspect différente de 1 permet d'avoir une plage angulaire d'observation plus large selon l'une des deux directions Ox ou Oy, ce qui peut être utile par exemple lorsque l'élément en couches est intégré dans un environnement où la possibilité d'observation est limitée selon l'une des directions.

De préférence, l'élément en couches est tel que, pour un échantillon de N pixels, la moyenne des coefficients de corrélation $r$ ($f_{pix}$, $f_{tot}$) de chaque pixel de l'échantillon est supérieure ou égale à 0,9.

De préférence, chaque pixel a au moins un côté de longueur inférieure ou égale à 150 $\mu$m, encore de préférence inférieure ou égale à 100 $\mu$m.

Le nombre N de pixel dans chaque échantillon est préférentiellement tel que N $\geq$ 3. Les pixels de chaque échantillon sont préférentiellement choisis de manière aléatoire. De manière avantageuse, l'échantillon de N pixels est choisi parmi N+2 pixels, en retirant le pixel ayant le coefficient de corrélation le plus élevé et le pixel ayant le coefficient de corrélation le moins élevé.

Le parallélisme des surfaces de contact texturées de l'élément en couches transparent implique que, pour la ou chaque couche de la couche centrale qui est encadrée par des couches de nature, métallique ou non métallique, différente de la sienne ou d'indices de réfraction différents du sien, l'épaisseur de la couche est uniforme perpendiculairement à ses surfaces de contact avec les couches adjacentes. Cette uniformité de l'épaisseur peut être globale sur toute l'étendue de la texture, ou locale sur des tronçons de la texture. En particulier, lorsque la texture présente des variations de pente, l'épaisseur entre deux surfaces de contact texturées consécutives peut changer, par tronçon, en fonction de la pente de la texture, les surfaces de contact texturées restant toutefois toujours parallèles entre elles. Ce cas se présente notamment pour une couche déposée par pulvérisation cathodique, en particulier par pulvérisation cathodique assistée par un champ magnétique (pulvérisation cathodique magnétron), où l'épaisseur de la couche est d'autant plus faible que la pente de la texture augmente. Ainsi, localement, sur chaque tronçon de texture ayant une pente donnée, l'épaisseur de la couche reste constante, mais l'épaisseur de la couche est différente entre un premier tronçon de texture ayant une première pente et un deuxième tronçon de texture ayant une deuxième pente différente de la première pente.

De manière avantageuse, afin d'obtenir le parallélisme des surfaces de contact texturées à l'intérieur de l'élément en couches transparent, la ou chaque couche constitutive de la couche centrale est une couche déposée par pulvérisation cathodique. En effet, la pulvérisation cathodique, en particulier la pulvérisation cathodique assistée par un champ magnétique (pulvérisation cathodique magnétron), garantit que les surfaces délimitant la couche sont parallèles entre elles, ce qui n'est pas le cas d'autres techniques de dépôt telles que l'évaporation ou le dépôt chimique en phase vapeur (CVD), ou encore le procédé sol-gel. Or, le parallélisme des surfaces de contact texturées à l'intérieur de l'élément en couches est essentiel pour obtenir une transmission spéculaire à travers l'élément.

Selon un aspect de l'invention, la couche centrale de l'élément en couches transparent comprend au moins une couche mince constituée en un matériau diélectrique à haut indice de réfraction, différent de l'indice de réfraction des couches externes, tel que $Si_3N_4$, $SnO_2$, ZnO, AlN, NbO, NbN, $TiO_2$, ou constituée en un matériau diélectrique à bas indice de réfraction, différent de l'indice de réfraction des couches externes, tel que $SiO_2$, $Al_2O_3$, $MgF_2$, $AlF_3$. La couche centrale peut également comprendre au moins une couche mince métallique, notamment une couche mince d'argent, d'or, de titane, de niobium, de silicium, d'aluminium, d'alliage nickel-chrome (NiCr), d'acier inoxydable, ou de leurs alliages. Au sens de l'invention, une couche mince est une couche d'épaisseur inférieure à 1 micromètre.

De manière avantageuse, la composition chimique de la couche centrale peut être ajustée pour conférer des propriétés supplémentaires à l'élément en couches transparent, par exemple des propriétés thermiques, de type contrôle solaire et/ou basse émissivité. Ainsi, dans un mode de réalisation, la couche centrale est un empilement de couches minces comprenant une alternance de « n » couches fonctionnelles métalliques, notamment de couches fonctionnelles à base d'argent ou d'alliage métallique contenant de l'argent, et de « (n + 1) » revêtements de contrôle de la réflexion des couches fonctionnelles, avec n ≥ 1, où chaque couche fonctionnelle métallique est disposée entre deux revêtements de contrôle de la réflexion.

De manière connue, un tel empilement à couche fonctionnelle métallique présente des propriétés de réflexion dans le domaine du rayonnement solaire et/ou dans le domaine du rayonnement infrarouge de grande longueur d'onde. Dans un tel empilement, la ou les couches fonctionnelles métalliques déterminent essentiellement les performances thermiques, tandis que les revêtements de contrôle de la réflexion qui les encadrent agissent sur l'aspect optique de manière interférentielle. En effet, si les couches fonctionnelles métalliques permettent d'obtenir des performances thermiques souhaitées même à une faible épaisseur géométrique, de l'ordre de 10 nm pour chaque couche fonctionnelle métallique, elles s'opposent toutefois fortement au passage de rayonnement dans le domaine de longueurs d'onde du visible. Dès lors, des revêtements de contrôle de la réflexion de part et d'autre de chaque couche fonctionnelle métallique sont nécessaires pour assurer une bonne transmission lumineuse dans le domaine du visible. En pratique, c'est l'empilement global de la couche centrale, comprenant les couches minces métalliques et les revêtements de contrôle de la réflexion, qui est optimisé optiquement. De manière avantageuse, l'optimisation optique peut être faite sur l'empilement global de l'élément en couches ou du vitrage, c'est-à-dire incluant les couches externes positionnées de part et d'autre de la couche centrale et d'éventuelles couches additionnelles.

L'élément en couches transparent obtenu combine alors des propriétés optiques, à savoir des propriétés de transmission spéculaire et de réflexion diffuse d'un rayonnement incident sur l'élément en couches, et des propriétés thermiques, à savoir des propriétés de contrôle solaire et/ou de basse émissivité. Un tel élément en couches transparent peut être utilisé pour des vitrages de protection solaire et/ou d'isolation thermique, notamment de véhicules ou de bâtiments.

Selon un aspect de l'invention, la texture de chaque surface de contact entre deux couches adjacentes dont l'une est une couche transparente, notamment diélectrique, et l'autre est une couche métallique, ou qui sont deux couches transparentes, notamment diélectriques, d'indices de réfraction différents, est formée par une pluralité de motifs en creux ou en saillie par rapport à un plan général de la surface de contact. Dans le cadre de l'invention, la pente quadratique moyenne Rdq de la texture de chaque surface de contact est strictement supérieure à 0,2°. De préférence, la pente quadratique moyenne Rdq de la texture de chaque surface de contact est comprise entre 0,5° et 30°, de préférence entre 2° et 20°, encore de préférence entre 2° et 10°. Dans le cadre de cette demande, la pente quadratique moyenne Rdq d'une surface est telle que définie dans la norme ISO 4287, et mesurée à l'aide d'un profilomètre MICROMESURE 2 de la société STIL, sur une surface de 1 mm × 1 mm avec un pas d'échantillonnage de 1 μm × 1 μm.

Pour les mesures de rugosité réalisées à l'aide du profilomètre MICROMESURE 2 de la société STIL, les conditions de mesure sont les suivantes. La tête de mesure est constituée d'une lentille chromatique associée à un "magnifier" ayant les caractéristiques : ouverture numérique de 0,42 ; angle de mesure maximum de 25° ; résolution en Z de 0,04 microns ; résolution latérale de 4,5 microns. L'extraction du paramètre de rugosité qu'est la pente quadratique moyenne Rdq est réalisée avec un filtrage gaussien passe-bas ayant une longueur de coupure de 19 microns (qui filtre les microrugosités) et un filtrage gaussien passe-haut ayant une longueur de coupure de 1 mm (qui filtre les ondulations).

Dans un mode de réalisation de l'invention, l'une des deux couches externes de l'élément en couches transparent est une couche externe texturée comprenant un substrat rigide ou flexible, notamment en verre ou en matériau organique polymérique, dont une surface principale est texturée. La texturation de l'une des surfaces principales du substrat peut être obtenue par tout procédé connu de texturation, par exemple par embossage de la surface du substrat préalablement chauffée à une température à laquelle il est possible de la déformer, en particulier par laminage au moyen d'un rouleau ayant à sa surface une texturation complémentaire de la texturation à former sur le substrat, ou encore par impression 3D, préférentiellement à partir d'une texture générée informatiquement.

Dans le cas d'une couche externe texturée formée par un substrat texturé en verre minéral, le verre est de préférence de type silico-sodo-calcique, mais selon des variantes il peut être en verre de type borosilicate, alumino-borosilicate, etc.

Dans le cas d'une couche externe texturée formée par un substrat texturé en matériau organique polymérique, des exemples de matériaux appropriés comprennent, notamment, les polyesters tels que le polyéthylène téréphtalate (PET), le polybutylène téréphtalate (PBT), le polyéthylène naphtalate (PEN) ; les polyacrylates tels que le polyméthacrylate de méthyle (PMMA) ; les polycarbonates ; les polyuréthanes ; les polyamides ; les polyimides ; les polymères fluorés tels que l'éthylène tétrafluoroéthylène (ETFE), le polyfluorure de vinylidène (PVDF), le polychlorotrifluoroéthylène (PCTFE), l'éthylène de chlorotrifluoroéthylène (ECTFE), les copolymères éthylène-propylène fluorés (FEP) ; les résines photoréticulables et/ou photopolymérisables, telles que les résines thiolène, polyuréthane, uréthane-acrylate, polyester-acrylate ; les polythiouréthanes. Ces polymères présentent en général une gamme d'indice de réfraction à 550 nm allant de 1,30 à 1,70. Toutefois, il est intéressant de noter que certains de ces polymères, et notamment les polymères comprenant du soufre tels que les polythiouréthanes, peuvent présenter des indices de réfraction à 550 nm élevés pouvant aller jusqu'à 1,74.

Dans un autre mode de réalisation de l'invention, l'une des deux couches externes de l'élément en couches transparent est une couche externe texturée formée par une couche conformable, dont une surface principale est texturée et qui est rapportée par son autre surface principale sur un substrat rigide ou flexible. Il peut s'agir notamment d'une couche thermoformable ou d'une couche en matériau photoréticulable et/ou photopolymérisable. Dans ce cas, un procédé bien approprié pour la texturation de l'une des surfaces principales de la couche conformable est, notamment, l'embossage. De préférence, le matériau photoréticulable et/ou photopolymérisable se présente sous forme liquide à température ambiante et donne, lorsqu'il a été irradié et photoréticulé et/ou photopolymérisé, un solide transparent dépourvu de bulles ou de toute autre irrégularité. Il peut s'agir en particulier d'une résine telle que celles habituellement utilisées comme adhésifs, colles ou revêtements de surface. Ces résines sont généralement à base de monomères/comonomères/pré-polymères de type époxy, époxysilane, acrylate, méthacrylate, acide acrylique, acide méthacrylique. On peut citer par exemple les résines thiolène, polyuréthane, uréthane-acrylate, polyester-acrylate. Au lieu d'une résine, il peut s'agir d'un gel aqueux photoréticulable, tel qu'un gel de polyacrylamide.

Lorsque l'une des deux couches externes de l'élément en couches transparent est une couche externe texturée ayant une surface principale texturée et son autre surface principale lisse, la couche centrale est avantageusement formée :

- soit par une couche unique en matériau métallique ou en matériau transparent, notamment diélectrique, d'indice de réfraction différent de celui de la couche externe texturée, déposée de manière conforme sur la surface principale texturée de la couche externe texturée,
- soit par un empilement de couches, qui comprend au moins une couche en matériau métallique ou en matériau transparent, notamment diélectrique, d'indice de réfraction différent de celui de la couche externe texturée, déposées successivement de manière conforme sur la surface principale texturée de la couche externe texturée.

Selon l'invention, on considère que le dépôt de la couche centrale, ou le dépôt successif des couches de la couche centrale, sur la surface principale texturée de la couche externe texturée est réalisé de manière conforme si, suite au dépôt, la surface de la ou chaque couche de la couche centrale est texturée et parallèle à la surface principale texturée de la couche externe texturée. Selon une caractéristique avantageuse, le dépôt de la couche centrale de manière conforme, ou des couches de la couche centrale successivement de manière conforme, sur la surface principale texturée de la couche externe texturée est réalisé par pulvérisation cathodique, notamment assistée par un champ magnétique (pulvérisation cathodique magnétron). D'autres techniques de dépôt conforme sont également envisageables, telles que des techniques d'évaporation, en particulier pour le dépôt de couches métalliques.

Selon un aspect de l'invention, l'autre couche externe de l'élément en couches transparent, c'est-à-dire la couche externe située de l'autre côté de la couche centrale par rapport à la couche externe texturée, comprend une couche de matériau durcissable d'indice de réfraction sensiblement égal à celui de la couche externe texturée, déposée sur la surface principale texturée de la couche centrale opposée à la couche externe texturée en étant initialement dans un état visqueux, liquide ou pâteux adapté à des opérations de mise en forme.

La couche déposée initialement dans un état visqueux, liquide ou pâteux peut être, en particulier, une couche de planarisation de la surface de l'élément en couches transparent. En variante, la couche déposée initialement dans un état visqueux, liquide ou pâteux peut être une couche assurant une solidarisation entre, d'une part, la couche externe texturée munie de la couche centrale et, d'autre part, un contre-substrat.

La couche déposée initialement dans un état visqueux, liquide ou pâteux peut être une couche de matériau photoréticulable et/ou photopolymérisable. De préférence, ce matériau photoréticulable et/ou photopolymérisable se présente sous forme liquide à température ambiante et donne, lorsqu'il a été irradié et photoréticulé et/ou photopolymérisé, un solide transparent dépourvu de bulles ou de toute autre irrégularité. Il peut s'agir en particulier d'une résine telle que celles habituellement utilisées comme adhésifs, colles ou revêtements de surface. Ces résines sont généralement à base de monomères/comonomères/pré-polymères de type époxy, époxysilane, acrylate, méthacrylate, acide acrylique, acide méthacrylique. On peut citer par exemple les résines thiolène, polyuréthane, uréthane-acrylate, polyester-acrylate. Au lieu d'une résine, il peut s'agir d'un gel aqueux photoréticulable, tel qu'un gel de polyacrylamide.

En variante, la couche déposée initialement dans un état visqueux, liquide ou pâteux peut être une couche déposée par un procédé sol-gel, notamment une couche sol-gel comprenant une matrice hybride organique/inorganique à base de silice. Une telle couche sol-gel est particulièrement avantageuse car elle offre la possibilité d'ajuster avec précision la valeur de son indice de réfraction, de sorte qu'il soit le plus proche possible de celui de la couche externe texturée. Selon l'invention, l'accord d'indice ou écart d'indice entre les deux couches externes de l'élément en couches transparent correspond à la valeur absolue de la différence entre les indices de réfraction à 550 nm de leurs matériaux diélectriques constitutifs. Plus l'écart d'indice est faible, plus la vision à travers l'élément en couches est nette. En particulier, on obtient une excellente vision avec un accord d'indice inférieur ou égal à 0,050, de préférence inférieur ou égal à 0,030 et mieux inférieur ou égal à 0,015.

Selon un aspect de l'invention, au moins l'une des deux couches externes de l'élément en couches transparent est un feuillet intercalaire à base de matériau polymère, notamment thermoformable ou sensible à la pression, c'est-à-dire le type de feuillet qu'on utilise comme intercalaire dans les vitrages feuilletés. Il peut s'agir, en particulier, d'au moins un feuillet à base de polybutyral de vinyle (PVB), d'éthylène-acétate de vinyle (EVA), de polyuréthane (PU), de polyéthylène téréphtalate (PET), de polychlorure de vinyle (PVC). Cette couche à base de matériau polymère peut jouer le rôle d'un intercalaire de feuilletage qui peut être feuilleté ou calandré à un substrat en tant que couche additionnelle, par exemple un verre clair ou extra-clair.

Selon un aspect de l'invention, l'élément en couches transparent peut être un film flexible. Un tel film flexible est avantageusement muni, sur l'une de ses surfaces principales externes, d'une couche d'adhésif recouverte d'une bande de protection destinée à être retirée pour le collage du film. L'élément en couches sous forme de film flexible est alors apte à être rapporté par collage sur une surface existante, par exemple une surface d'un vitrage transparent, afin de conférer à cette surface des propriétés de réflexion diffuse, tout en maintenant des propriétés de transmission spéculaire à travers le vitrage. Le vitrage sur lequel est rapporté l'élément en couches transparent sous forme de film flexible peut être un vitrage plan ou bombé.

L'invention a également pour objet un vitrage transparent comprenant un élément en couches transparent tel que décrit précédemment. L'invention vise plus particulièrement un écran de projection transparent comprenant un élément en couches transparent tel que décrit précédemment.

Dans un mode de réalisation, le vitrage ou écran de projection transparent comprend en outre au moins une couche additionnelle positionnée contre l'élément en couches transparent, de préférence choisie parmi :

- les substrats transparents choisis parmi les polymères, les verres ou les céramiques comprenant deux surfaces principales lisses,
- les matériaux durcissables initialement dans un état visqueux, liquide ou pâteux adapté à des opérations de mise en forme, notamment une couche sol-gel,
- les feuillets intercalaires à base de matériau polymère, notamment thermoformables ou sensibles à la pression.

De manière avantageuse, un vitrage ou écran de projection transparent incorporant l'élément en couches comprend au moins un revêtement antireflet à l'interface entre l'air et le matériau constitutif de la couche formant une surface principale externe du vitrage qui est destinée à être à l'opposé d'un projecteur lors de la projection d'images sur le vitrage. L'ajout d'un revêtement antireflet permet de diminuer les réflexions multiples à l'intérieur de l'élément en couches transparent et ainsi d'améliorer la qualité des images projetées.

Le revêtement antireflet prévu sur au moins l'une des surfaces principales externes du vitrage ou écran de projection transparent peut être de tout type permettant de réduire la réflexion de rayonnement à l'interface entre l'air et la couche formant la surface principale externe. Il peut s'agir, notamment, d'une couche d'indice de réfraction compris entre l'indice de réfraction de l'air et l'indice de réfraction de la couche formant la surface principale externe, telle qu'une couche déposée sur la surface de la couche formant la surface principale externe par une technique sous vide ou une couche poreuse de type sol-gel, ou encore, dans le cas où la couche formant la surface principale externe est en verre, une partie superficielle creusée de cette couche en verre obtenue par un traitement à l'acide de type "etching". En variante, le revêtement antireflet peut être formé par un empilement de couches minces ayant des indices de réfraction alternativement plus faibles et plus forts jouant le rôle d'un filtre interférentiel à l'interface entre l'air et la couche formant la surface principale externe, ou par un empilement de couches minces présentant un gradient, continu ou échelonné, d'indices de réfraction entre l'indice de réfraction de l'air et celui de la couche formant la surface principale externe.

Les surfaces principales externes lisses de l'élément en couches transparent et du vitrage ou écran de projection transparent peuvent être planes ou bombées. En particulier, l'élément en couches transparent peut être mis en oeuvre dans un vitrage bombé, par exemple pour des bâtiments ou des véhicules, notamment automobiles. Selon un aspect de l'invention, les surfaces principales externes lisses de l'élément en couches transparent peuvent être non parallèles entre elles, par exemple dans le cas d'un élément en couches en forme de coin destiné à être utilisé dans un dispositif comprenant par ailleurs un système de visualisation dit tête haute, ou "Head Up Display" (HUD), afin d'éviter un phénomène de double image. Dans d'autres applications, les surfaces principales externes lisses de l'élément en couches sont de préférence parallèles entre elles, ce qui contribue à limiter la dispersion lumineuse pour un rayonnement traversant l'élément en couches, et donc à améliorer la netteté de la vision à travers l'élément en couches.

## BREVE DESCRIPTION DES FIGURES

Les caractéristiques et avantages de l'invention apparaîtront dans la description qui va suivre de plusieurs modes de réalisation d'un élément en couches et d'un vitrage ou écran de projection transparent selon l'invention, donnée uniquement à titre d'exemple et faite en se référant aux dessins annexés dans lesquels :

- La figure 1 est une vue schématique montrant la réflexion diffuse et spéculaire d'un rayonnement incident sur un élément en couches selon l'art antérieur.
- La figure 2 est une coupe transversale schématique d'un élément en couches selon l'invention, la position d'un projecteur étant également montrée sur cette figure.
- La figure 2a est une vue à plus grande échelle d'un détail de l'élément en couches de la figure 2, selon une première alternative.
- La figure 2b est une vue à plus grande échelle d'un détail de l'élément en couches de la figure 2, selon une deuxième alternative.
- La figure 3 est une coupe transversale schématique d'un système de projection, comprenant un projecteur et un vitrage comportant l'élément en couches de la figure 2, pour une première variante de structure du vitrage.
- La figure 4 est une coupe analogue à la figure 3 d'un système de projection, comprenant un projecteur et un vitrage comportant l'élément en couches de la figure 2, pour une deuxième variante de structure du vitrage.
- La figure 5a est une topologie d'une surface de contact texturée d'un élément en couches selon un premier mode de réalisation de l'invention.
- La figure 5b montre schématiquement la distribution des pentes de la surface de contact texturée de la figure 5a.
- La figure 6a est une topologie d'une surface de contact texturée d'un élément en couches selon un deuxième mode de réalisation de l'invention.
- La figure 6b montre schématiquement la distribution des pentes de la surface de contact texturée de la figure 6a.
- La figure 7a est une topologie d'une surface de contact texturée d'un élément en couches selon un troisième mode de réalisation de l'invention.
- La figure 7b montre schématiquement la distribution des pentes de la surface de contact texturée de la figure 7a.
- La figure 8 montre schématiquement la distribution des pentes d'une surface de contact texturée d'un élément en couches selon un quatrième mode de réalisation de l'invention.
- La figure 9 montre schématiquement la distribution des pentes d'une surface de contact texturée d'un élément en couches selon un cinquième mode de réalisation de l'invention.
- La figure 10 montre schématiquement la distribution des pentes d'une surface de contact texturée d'un élément en couches selon un sixième mode de réalisation de l'invention.
- La figure 11 montre schématiquement la distribution des pentes d'une surface de contact texturée d'un élément en couches selon un septième mode de réalisation de l'invention.
- La figure 12 est une vue schématique montrant la réflexion diffuse et spéculaire d'un rayonnement incident sur un élément en couches selon l'invention.

## DESCRIPTION DETAILLEE

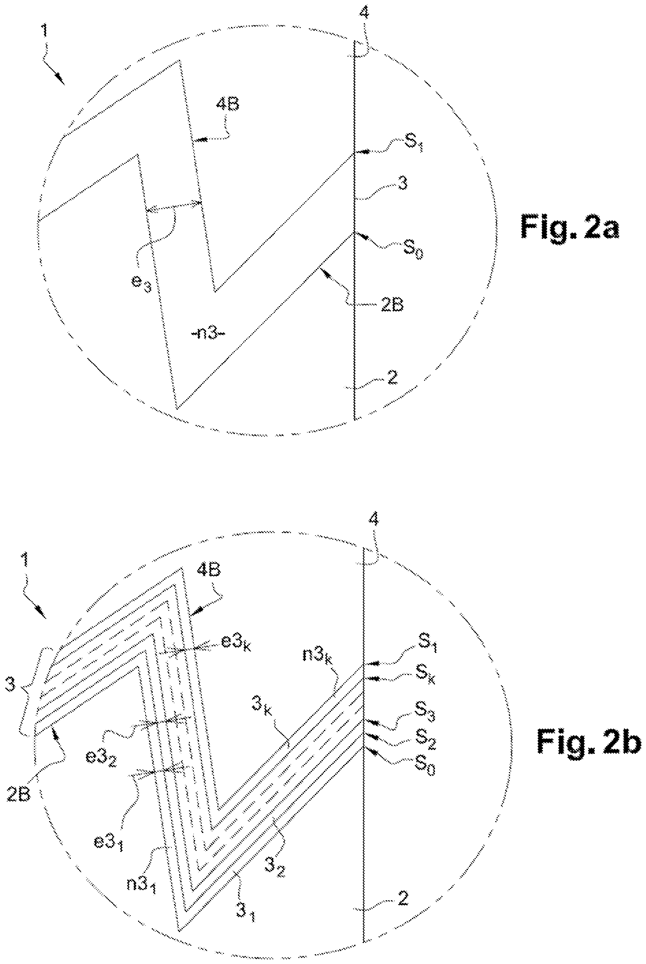

Sauf précision contraire, un même élément apparaissant sur des figures différentes présente une référence unique. Pour la clarté du dessin, les épaisseurs relatives des différentes couches n'ont pas été rigoureusement respectées sur les figures 2 à 4. De plus, la possible variation d'épaisseur de la ou chaque couche constitutive de la couche centrale en fonction de la pente de la texture n'a pas été représentée sur ces figures, étant entendu que cette possible variation d'épaisseur n'impacte pas le parallélisme des surfaces de contact texturées. En effet, pour chaque pente donnée de la texture, les surfaces de contact texturées sont parallèles entre elles. Par ailleurs, on note que les surfaces de contact ne sont représentées que schématiquement sur les figures 2 à 4, étant entendu que leur texture respecte le critère de distribution des pentes de l'invention.

La figure 1, qui montre schématiquement la réflexion diffuse et spéculaire d'un rayonnement incident sur un élément en couches selon l'art antérieur, a été décrite précédemment.

La figure 2 montre un élément en couches 1 selon l'invention, comportant deux couches externes 2 et 4 qui sont constituées en des matériaux diélectriques transparents ayant sensiblement le même indice de réfraction n2, n4. Chaque couche externe 2 ou 4 présente une surface principale lisse, respectivement 2A ou 4A, dirigée vers l'extérieur de l'élément en couches, et une surface principale texturée, respectivement 2B ou 4B, dirigée vers l'intérieur de l'élément en couches.

Les textures des surfaces internes 2B et 4B sont complémentaires l'une de l'autre. Les surfaces texturées 2B et 4B sont positionnées en regard l'une de l'autre, dans une configuration où leurs textures sont strictement parallèles entre elles. L'élément en couches 1 comprend également une couche centrale 3, intercalée en contact entre les surfaces texturées 2B et 4B.

La figure 2a montre une variante de réalisation selon laquelle la couche centrale 3 est monocouche et constituée en un matériau transparent qui est soit métallique, soit diélectrique d'indice de réfraction n3 différent de celui des couches externes 2 et 4. La figure 2b montre une variante de réalisation selon laquelle la couche centrale 3 est formée par un empilement transparent de plusieurs couches $3_1$, $3_2$, ..., $3_k$, où au moins l'une des couches $3_1$ à $3_k$ est soit une couche métallique, soit une couche diélectrique d'indice de réfraction différent de celui des couches externes 2 et 4. De préférence, au moins chacune des deux couches $3_1$ et $3_k$ situées aux extrémités de l'empilement est une couche métallique ou une couche diélectrique d'indice de réfraction $n3_1$ ou $n3_k$ différents de celui des couches externes 2 et 4.

Sur les figures 2a et 2b, on note $S_0$ la surface de contact entre la couche externe 2 et la couche centrale 3, et $S_1$ la surface de contact entre la couche centrale 3 et la couche externe 4. De plus, sur la figure 2b, on note successivement $S_2$ à $S_k$ les surfaces de contact internes de la couche centrale 3, en partant de la surface de contact la plus proche de la surface $S_0$.

Dans la variante de la figure 2a, du fait de l'agencement de la couche centrale 3 en contact entre les surfaces texturées 2B et 4B qui sont parallèles entre elles, la surface de contact $S_0$ entre la couche externe 2 et la couche centrale 3 est texturée et parallèle à la surface de contact $S_1$ entre la couche centrale 3 et la couche externe 4. En d'autres termes, la couche centrale 3 est une couche texturée présentant une épaisseur e3 uniforme, prise perpendiculairement aux surfaces de contact $S_0$ et $S_1$.

Dans la variante de la figure 2b, chaque surface de contact $S_2$,...,$S_k$ entre deux couches adjacentes de l'empilement constitutif de la couche centrale 3 est texturée et strictement parallèle aux surfaces de contact $S_0$ et $S_1$ entre les couches externes 2, 4 et la couche centrale 3. Ainsi, toutes les surfaces de contact $S_0$,$S_1$,...,$S_k$ entre des couches adjacentes de l'élément en couches 1 qui sont soit de natures différentes, diélectrique ou métallique, soit en matériaux diélectriques d'indices de réfraction différents, sont texturées et parallèles entre elles. En particulier, chaque couche $3_1$, $3_2$,...,$3_k$ de l'empilement constitutif de la couche centrale 3 présente une épaisseur $e3_1$,$e3_2$,...,$e3_k$ uniforme, prise perpendiculairement aux surfaces de contact $S_0$,$S_1$,...,$S_k$.

Selon un aspect de l'invention, l'épaisseur e3 ou $e3_1$,$e3_2$,...,$e3_k$ de la ou chaque couche constitutive de la couche centrale 3 est inférieure à la hauteur moyenne des motifs de chaque surface de contact texturée $S_0$,$S_1$ ou $S_0$,$S_1$,...,$S_k$ de l'élément en couches 1. Cette condition est importante pour augmenter la probabilité que l'interface d'entrée d'un rayonnement dans une couche de la couche centrale 3 et l'interface de sortie du rayonnement hors de cette couche soient parallèles, et ainsi augmenter le pourcentage de transmission spéculaire du rayonnement à travers l'élément en couches 1. Dans un souci de visibilité des différentes couches, cette condition n'a pas été strictement respectée sur les figures. En pratique, lorsque la couche centrale 3 est une couche mince ou un empilement de couches minces, l'épaisseur e3 ou $e3_1$,$e3_2$,...,$e3_k$ de chaque couche de la couche centrale 3 est de l'ordre de, ou inférieure à, 1/10 de la hauteur moyenne des motifs de chaque surface de contact texturée de l'élément en couches.

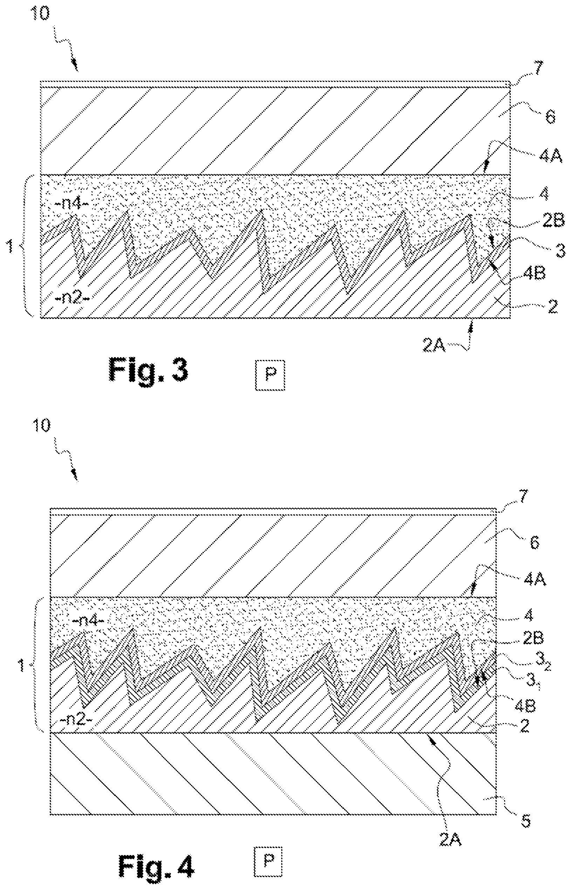

Chacune des figures 3 et 4 est une coupe transversale schématique d'un système de projection, comprenant un projecteur P et un vitrage 10 comportant l'élément en couches 1 de la figure 2. Les figures 3 et 4 illustrent deux structures possibles pour le vitrage 10, à titre d'exemples non limitatifs.

Dans le premier exemple de vitrage 10 montré sur la figure 3, la première couche externe 2 est un substrat texturé en verre clair ou extra-clair, et la deuxième couche externe 4 est formée par un feuillet intercalaire, par exemple en PVB, qui a sensiblement le même indice de réfraction que le substrat 2 et qui se conforme à la texture de la surface texturée de la couche centrale 3. Le feuillet intercalaire 4 est calandré par sa surface externe 4A à un substrat plan 6 en verre clair ou extra-clair, par exemple un verre de type SGG Planilux commercialisé par Saint-Gobain Glass, qui forme une couche additionnelle. De plus, le vitrage 1 comprend un revêtement antireflet 7 sur la surface principale externe du substrat plan 6, qui est destinée à être à l'opposé par rapport à un projecteur P lors de la projection d'images sur le vitrage 10. La présence du revêtement antireflet 7 permet de diminuer les réflexions multiples à l'intérieur de l'élément en couches 1 et ainsi d'améliorer la qualité des images projetées.

Dans le deuxième exemple de vitrage 10 montré sur la figure 4, la première couche externe 2 n'est pas un verre texturé, mais un feuillet intercalaire, par exemple en PVB, qui a sensiblement le même indice de réfraction que le feuillet intercalaire 4. Dans ce deuxième exemple, la couche centrale 3 comprend un film flexible $3_1$, par exemple un film de poly(méthacrylate de méthyle) (PMMA) ayant une épaisseur de l'ordre de 50 à 250 $\mu$m, sur lequel a été déposée une couche mince $3_2$ en matériau diélectrique ou en matériau métallique, par exemple une couche mince de $TiO_2$ ayant une épaisseur de l'ordre de 50 à 75 nm. L'ensemble du film flexible $3_1$ et de la couche mince $3_2$ est mis en forme d'ondulation ou d'accordéon pour créer la couche centrale texturée 3, qui est ensuite prise en sandwich entre les feuillets intercalaires 2 et 4, de telle sorte que les surfaces de contact entre les couches 2, $3_1$, $3_2$ et 4 restent parallèles entre elles. Chacun des feuillets intercalaires 2, 4 est calandré par sa surface externe 2A, 4A à un substrat plan 5 ou 6 en verre clair ou extra-clair, par exemple un verre de type SGG Planilux commercialisé par Saint-Gobain Glass, qui forment des couches additionnelles. De plus, comme dans l'exemple de la figure 3, le vitrage 1 comprend un revêtement antireflet 7 sur la surface principale externe du substrat plan 6, qui est destinée à être à l'opposé par rapport à un projecteur P lors de la projection d'images sur le vitrage 10.

L'élément en couches 1 ou un vitrage l'incorporant est apte à être utilisé comme écran de projection. Tel que montré sur la figure 2, les première et deuxième couches externes 2, 4 et la couche centrale 3 de l'élément en couches 1 s'étendent parallèlement à un plan Oxy d'un référentiel (O, x, y, z), où l'axe Ox est selon une direction horizontale et l'axe Oy est selon une direction verticale pour un observateur. Dans l'exemple de la figure 2, l'observateur se trouve du côté du projecteur P, face à la surface principale lisse 2A de l'élément en couches 1.

La texture de chaque surface de contact texturée $S_0$, $S_1$, ..., $S_k$ de l'élément en couches 1 est d'équation $z = f(x, y)$ et présente, en chaque point de coordonnées $(X_0, Y_0)$ de la surface de contact, une première pente directionnelle $\theta_x$ et une deuxième pente directionnelle $\theta_y$ telles que :

$$\theta_x(X_0, Y_0) = \arctan \frac{dz}{dx}\Big|_{X_0, Y_0} \quad \text{et}$$

$$\theta_y(X_0, Y_0) = \arctan \frac{dz}{dy}\Big|_{X_0, Y_0}.$$

Conformément à l'invention, la distribution des pentes de la texture de chaque surface de contact texturée $S_0$, $S_1$, ..., $S_k$, correspondant à la fréquence de chaque couple de pente $(\theta_x, \theta_y)$, ne présente pas de symétrie axiale selon au moins l'un des axes $O\theta_x$, $O\theta_y$ d'un premier repère orthogonal $(O, \theta_x, \theta_y)$ où O correspond au couple de pentes (0, 0), ou ne présente pas de symétrie axiale selon au moins l'un des axes $O\theta_x'$, $O\theta_y'$ d'un deuxième repère orthogonal $(O, \theta_x', \theta_y')$ obtenue par rotation de 45° du premier repère orthogonal $(O, \theta_x, \theta_y)$. Plusieurs exemples de distributions de pentes de textures conformes à des modes de réalisation de l'invention sont décrits ci-après.

La texture selon l'invention de chaque surface de contact texturée $S_0$, $S_1$, ..., $S_k$, est avantageusement obtenue par texturation d'une surface principale d'une première couche externe parmi les deux couches externes 2 et 4, notamment par embossage ou impression 3D, préférentiellement à partir d'une texture générée informatiquement, et dépôt de la couche centrale 3 de manière conforme sur la surface principale texturée de la première couche externe. On considère que la couche centrale 3 est déposée de manière conforme sur la surface principale texturée de la première couche externe si, suite au dépôt, la surface supérieure de la couche centrale 3 est texturée et parallèle à la surface principale texturée de la première couche externe. Le dépôt de la couche centrale 3 de manière conforme, ou le dépôt des couches constitutives de l'empilement de la couche centrale 3 de manière conforme, sur la surface principale texturée de la première couche externe est réalisé de préférence par pulvérisation cathodique, notamment assistée par champ magnétique.

La deuxième couche externe parmi les deux couches externes 2 et 4 peut être formée en déposant, sur la surface principale texturée de la couche centrale 3 opposée à la première couche externe, une couche qui a sensiblement le même indice de réfraction que la première couche externe et qui se présente initialement dans un état visqueux adapté à des opérations de mise en forme. La deuxième couche externe peut ainsi être formée, par exemple, par un procédé comprenant le dépôt d'une couche de matériau photoréticulable et/ou photopolymérisable initialement sous forme fluide puis l'irradiation de cette couche, ou par un procédé sol-gel. En variante, la deuxième couche externe peut être formée en positionnant, contre la surface principale texturée de la couche centrale 3 opposée à la première couche externe, une couche à base de matériau polymère ayant sensiblement le même indice de réfraction que la première couche externe, puis en conformant cette couche à base de matériau polymère contre la surface principale texturée de la couche centrale 3 par compression et/ou chauffage au moins à la température de transition vitreuse du matériau polymère.

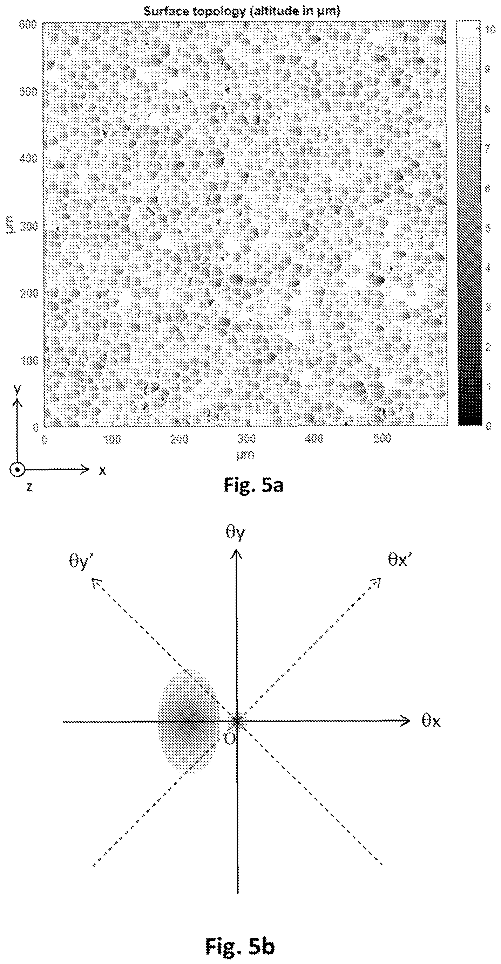

La figure 5a montre une topologie d'une surface de contact texturée d'un élément en couches 1 selon un premier mode de réalisation de l'invention. La figure 5b montre schématiquement la distribution des pentes de la texture de la surface de contact texturée de la figure 5a. Dans ce premier mode de réalisation, la distribution des pentes présente une symétrie axiale selon l'axe $O\theta_x$, mais ne présente pas de symétrie axiale selon les axes $O\theta_y$, $O\theta_x'$ et $O\theta_y'$.

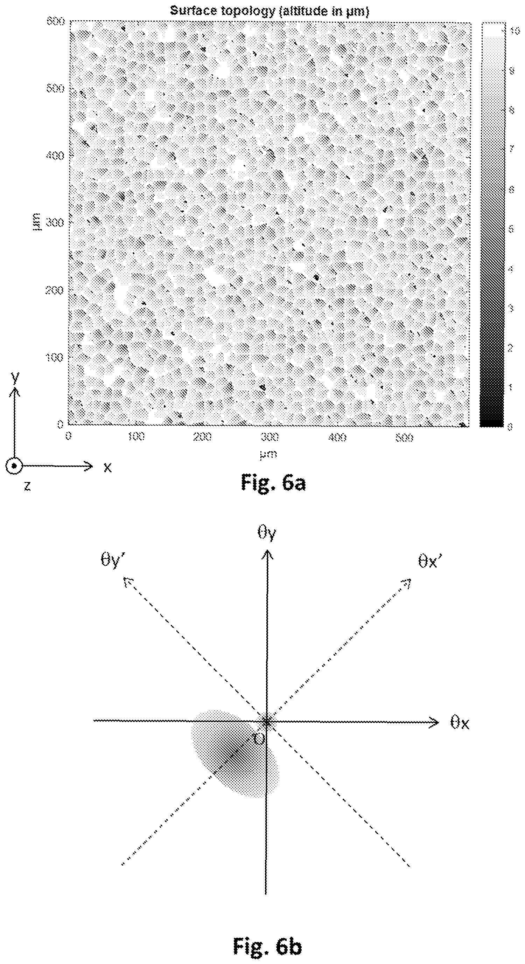

La figure 6a montre une topologie d'une surface de contact texturée d'un élément en couches 1 selon un deuxième mode de réalisation de l'invention. La figure 6b montre schématiquement la distribution des pentes de la texture de la surface de contact texturée de la figure 6a. Dans ce deuxième mode de réalisation, la distribution des pentes présente une symétrie axiale selon l'axe $O\theta_x'$, mais ne présente pas de symétrie axiale selon les axes $O\theta_x$, $O\theta_y$ et $O\theta_y'$.

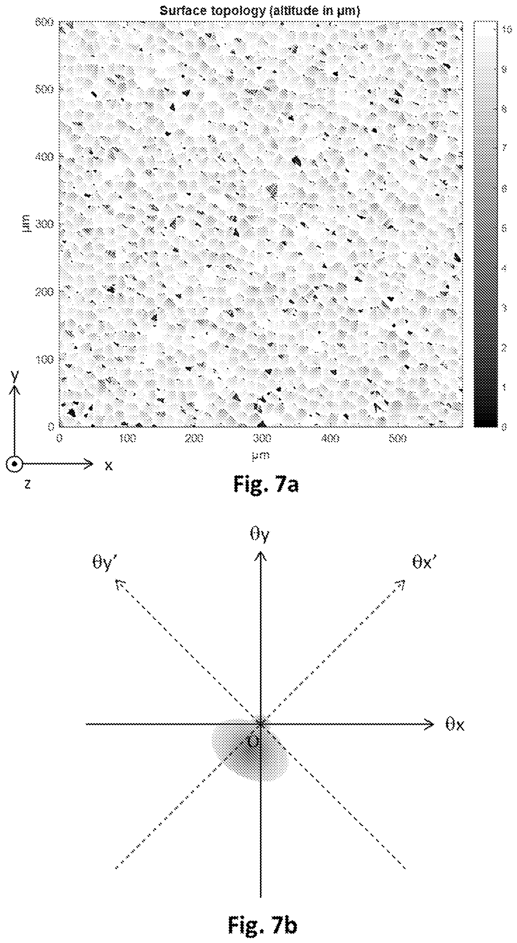

La figure 7a montre une topologie d'une surface de contact texturée d'un élément en couche 1 selon un troisième mode de réalisation de l'invention. La figure 7b montre schématiquement la distribution des pentes de la texture de la surface de contact texturée de la figure 7a. Dans ce troisième mode de réalisation, la distribution des pentes ne présente pas de symétrie axiale selon l'un quelconque des axes $O\theta_x$, $O\theta_y$, $O\theta_x'$ et $O\theta_y'$.

Comme bien visible sur les figures 5b, 6b, 7b, dans les premier, deuxième et troisième modes de réalisation, la distribution des pentes de la texture de chacune des surfaces de contact texturées de l'élément en couches 1, qui correspond à la fréquence de chaque couple de pentes $(\theta_x, \theta_y)$, présente un unique pic non centré en O. Ce pic non centré en O correspond à une direction privilégiée de réflexion spéculaire d'un rayonnement incident sur l'élément en couches 1, qui est distincte de la direction de réflexion spéculaire. Dès lors, il existe un angle d'observation privilégié pour observer une image projetée sur l'élément en couches 1, ou sur un vitrage 10 l'incorporant, cet angle d'observation privilégié étant différent de l'angle de réflexion spéculaire. Ainsi, un observateur positionné selon l'angle d'observation privilégié peut observer l'image projetée avec une luminosité importante, et sans être ébloui ou gêné par une réflexion spéculaire sur la surface externe lisse de l'élément en couches 1 ou d'un vitrage 10.

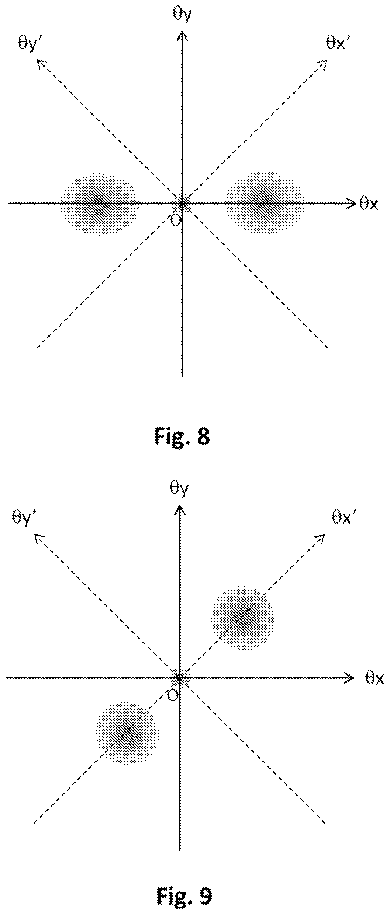

La figure 8 montre schématiquement la distribution des pentes de la texture d'une surface de contact texturée d'un élément en couches selon un quatrième mode de réalisation de l'invention. Dans ce quatrième mode de réalisation, la distribution des pentes présente une symétrie axiale selon les axes $O\theta_x$ et $O\theta_y$, mais ne présente pas de symétrie axiale selon les axes $O\theta_x'$ et $O\theta_y'$. De plus, comme montré par la forme ovale de chaque pic sur la figure 8, la largeur du pic est asymétrique et plus grande selon l'axe $O\theta_x$ que selon l'axe $O\theta_y$, ce qui traduit une plage angulaire d'observation pour un observateur plus importante selon l'axe Ox que selon l'axe Oy. En pratique, on définit pour chaque pic de la distribution des pentes un rapport d'aspect, qui est le rapport de la largeur la plus grande du pic, parmi la largeur selon l'axe $O\theta_x$ et la largeur selon l'axe $O\theta_y$, sur la largeur la plus petite du pic, parmi la largeur selon l'axe $O\theta_x$ et la largeur selon l'axe $O\theta_y$. De manière avantageuse, lorsqu'on souhaite avoir une plage angulaire d'observation plus large selon l'une des directions Ox ou Oy, par exemple lorsque l'élément en couches forme un écran intégré dans un environnement où la possibilité d'observation de l'écran est limitée selon l'une des deux directions, on peut choisir une valeur du rapport d'aspect différente de 1 pour au moins un pic. De manière avantageuse, le rapport d'aspect est compris entre 1 et 20.

La figure 9 montre schématiquement la distribution des pentes de la texture d'une surface de contact texturée d'un élément en couches selon un cinquième mode de réalisation de l'invention. Dans ce cinquième mode de réalisation, la distribution des pentes présente une symétrie axiale selon les axes $O\theta_x'$ et $O\theta_y'$, mais ne présente pas de symétrie axiale selon les axes $O\theta_x$ et $O\theta_y$.

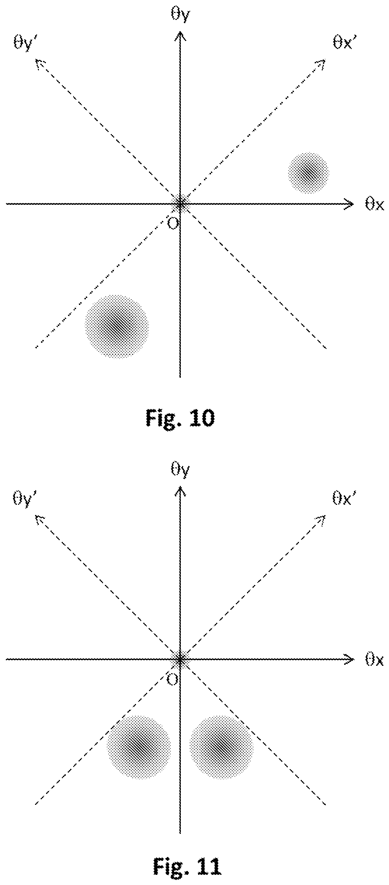

La figure 10 montre schématiquement la distribution des pentes de la texture d'une surface de contact texturée d'un élément en couches selon un sixième mode de réalisation de l'invention. Dans ce sixième mode de réalisation, la distribution des pentes ne présente pas de symétrie axiale selon l'un quelconque des axes $O\theta_x$, $O\theta_x'$, $O\theta_y$ et $O\theta_y'$.

La figure 11 montre schématiquement la distribution des pentes de la texture d'une surface de contact texturée d'un élément en couches selon un septième mode de réalisation de l'invention. Dans ce septième mode de réalisation, la distribution des pentes présente une symétrie axiale selon l'axe $O\theta_y$, mais ne présente pas de symétrie axiale selon les axes $O\theta_x$, $O\theta_x'$ et $O\theta_y'$.

Comme bien visible sur les figures 8 à 11, dans les quatrième, cinquième, sixième et septième modes de réalisation, la distribution des pentes de la texture de chacune des surfaces de contact texturées de l'élément en couches 1, qui correspond à la fréquence de chaque couple de pentes $(\theta_x, \theta_y)$, présente deux pics non centrés en O. Ces deux pics non centrés en O correspondent à deux directions privilégiées de réflexion spéculaire d'un rayonnement incident sur l'élément en couches 1, qui sont distinctes l'une de l'autre et distinctes de la direction de réflexion spéculaire. Dès lors, il existe deux angles d'observation privilégiés pour observer une image projetée sur l'élément en couches 1, ou sur un vitrage 10 l'incorporant, chacun de ces deux angles d'observation privilégiés étant différent de l'angle de réflexion spéculaire. Ainsi, pour un observateur positionné selon l'un ou l'autre de ces deux angles d'observation privilégiés, l'image projetée apparaît avec une luminosité importante et sans risque d'éblouissement par une réflexion spéculaire sur la surface externe lisse de l'élément en couches 1 ou du vitrage 10.

D'autres modes de réalisation, non illustrés sur les figures, sont également envisageables pour un élément en couches selon l'invention, notamment des modes de réalisation dans lesquels la distribution des pentes de la texture de chacune des surfaces de contact texturées de l'élément en couches, qui correspond à la fréquence de chaque couple de pentes $(\theta_x, \theta_y)$, présente un nombre n de pics non centrés en O, avec $n \geq 3$, ce qui correspond à n directions privilégiées de réflexion spéculaire d'un rayonnement incident sur l'élément en couches, qui sont distinctes entre elles et distinctes de la direction de réflexion spéculaire. Il existe alors n angles d'observation privilégiés pour observer une image projetée sur l'élément en couches ou un vitrage l'incorporant. Le nombre de pics non centrés en O impacte la luminosité de chaque pic, qui est d'autant plus faible que le nombre de pics est élevé. Un compromis entre le nombre d'angles d'observation souhaités pour l'élément en couches formant écran et la luminosité pour chaque angle d'observation est donc à trouver, en fonction également de la puissance lumineuse du projecteur utilisé.

Il est à noter qu'en pratique, la distribution des pentes de la texture de chaque surface de contact texturée de l'élément en couches selon l'un quelconque des modes de réalisation décrits précédemment présente également un pic centré en O, correspondant au couple de pentes (0, 0), comme montré schématiquement sur les figures 5b, 6b, 7b et 8 à 11. En effet, les motifs texturés réels, obtenus par exemple par embossage de verre ou de matériau polymérique à partir d'une texture « parfaite » générée informatiquement, présentent généralement des arêtes et des extrema qui ne sont pas parfaitement pointus mais légèrement arrondis.

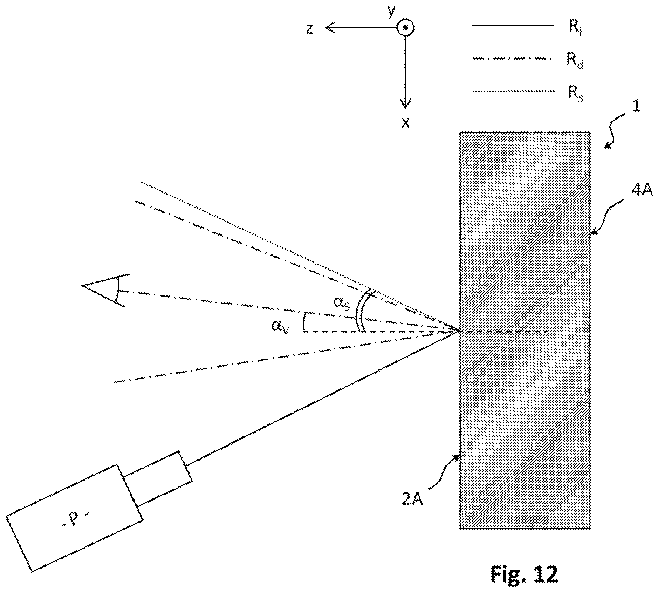

La figure 12 montre schématiquement la réflexion diffuse et spéculaire d'un rayonnement incident $R_i$ sur un élément en couches 1 conforme à l'invention. Une première partie du rayonnement incident est transmise par la surface externe lisse 2A puis est réfléchie de manière diffuse, dans une pluralité de directions $R_d$, par la couche centrale 3 (non représentée sur la figure 12). Une deuxième partie du rayonnement incident est réfléchie par la surface externe lisse 2A de manière spéculaire, à la manière d'un miroir, dans une direction $R_s$. Comme la pluralité de directions $R_d$ n'est pas centrée autour de la direction de réflexion spéculaire $R_s$, l'angle d'observation $\alpha_v$ d'un observateur idéalement placé relativement à la pluralité de directions $R_d$ de réflexion diffuse pour observer une image projetée est différent de l'angle $\alpha_s$ de réflexion spéculaire. L'observateur ainsi positionné n'est donc pas ébloui ou gêné par une réflexion spéculaire indésirable sur la surface externe lisse 2A.

On considère à présent que la surface externe lisse 2A de l'élément en couches 1 est divisée en une pluralité de pixels de même dimension, et on réalise une projection orthogonale de chaque pixel sur chaque surface de contact texturée à l'aplomb dudit pixel. On définit ainsi la texture de chaque surface de contact pour ledit pixel. Un pixel est typiquement de forme rectangulaire. La texture de chaque surface de contact au sein de chaque pixel présente une distribution des pentes $f_{pix}(\theta_x, \theta_y)$ ayant un certain coefficient de corrélation $r$ avec la distribution des pentes $f_{tot}(\theta_x, \theta_y)$ de la texture de la surface de contact totale. Le coefficient de corrélation $r$ est défini par la relation suivante :

$$r = \frac{\int_{\theta_x} \int_{\theta_y} \left[f_{pix}(\theta_x, \theta_y) - \overline{f_{pix}}\right]\left[f_{tot}(\theta_x, \theta_y) - \overline{f_{tot}}\right]}{\sqrt{\left(\int_{\theta_x} \int_{\theta_y} \left[f_{pix}(\theta_x, \theta_y) - \overline{f_{pix}}\right]^2\right)\left(\int_{\theta_x} \int_{\theta_y} \left[f_{tot}(\theta_x, \theta_y) - \overline{f_{tot}}\right]^2\right)}}$$

où $\overline{f_{px}}$ est la moyenne de la fonction $f_{pix}$ sur l'ensemble des pentes, et $\overline{f_{tot}}$ est la moyenne de la fonction $f_{tot}$ sur l'ensemble des pentes.

De manière avantageuse, selon l'invention, chaque pixel est un rectangle ayant au moins un côté de longueur inférieure ou égale à 500 $\mu$m, de préférence inférieure ou égale à 200 $\mu$m, et, pour un échantillon de N pixels, la moyenne des coefficients de corrélation $r$ de chaque pixel de l'échantillon est supérieure ou égale à 0,8, de préférence supérieure ou égale à 0,9. Chaque pixel est ainsi suffisamment représentatif de la texture de la surface de contact totale, c'est-à-dire de la distribution des pentes de la texture de chacune desdites surfaces de contact texturées de l'élément en couches, pour assurer une résolution satisfaisante en particulier lorsque l'élément en couches ou un vitrage l'incorporant est utilisé comme écran de projection. La nécessité d'une résolution suffisante est particulièrement importante dans le cas d'un élément en couches à réflexion diffuse directionnelle, afin que toute la surface de l'élément en couches ou d'un vitrage l'incorporant assure de manière homogène la redirection du rayonnement selon la ou les directions privilégiées correspondant aux angles d'observation privilégiés.

Le nombre N de pixel dans chaque échantillon est préférentiellement tel que N $\geq$ 3. Les pixels de chaque échantillon sont préférentiellement choisis de manière aléatoire. De plus, de manière préférée, l'échantillon de N pixels est choisi parmi N+2 pixels, en retirant le pixel ayant le coefficient de corrélation le plus élevé et le pixel ayant le coefficient de corrélation le moins élevé.

## Revendications

**1.** Eléments en couches transparent (1) comprenant :

- deux couches externes transparentes (2, 4) ayant sensiblement le même indice de réfraction (n2, n4), la valeur absolue de la différence entre leurs indices de réfraction à 550 nm étant inférieure ou égale à 0,15, et ayant chacune une surface principale externe lisse (2A, 4A), et
- une couche centrale (3) intercalée entre les couches externes (2, 4), la couche centrale (3) comportant au moins une couche transparente d'indice de réfraction (n3) différent de celui des couches externes ou une couche métallique,

où toutes les surfaces de contact ($S_0$, $S_1$, ..., $S_k$) entre deux couches adjacentes de l'élément en couches (1) où l'une des deux couches est une couche métallique, ou qui sont deux couches transparentes d'indices de réfraction différents, sont texturées et parallèles entre elles, une surface texturée étant une surface pour laquelle les propriétés de surface varient à une échelle plus grande que la longueur d'onde du rayonnement incident sur la surface,

**caractérisé en ce que**, pour un rayonnement ($R_i$) incident sur un côté de l'élément en couches (1), la réflexion lumineuse diffuse de l'élément en couches (1) a au moins un maximum dans une direction distincte de la direction ($R_s$) de réflexion spéculaire, c'est-à-dire que la distribution des pentes de la texture de chaque surface de contact ($S_0$, $S_1$, ..., $S_k$) texturée correspondant à la fréquence de chaque couple de pente ($\theta x$, $\theta_y$) présente au moins un pic non centré en O, où O correspond au couple de pentes (0, 0),

la réflexion étant dite « diffuse » lorsqu'un rayonnement incident avec un angle d'incidence donné est réfléchi dans une pluralité de directions, la réflexion étant dite « spéculaire » lorsqu'un rayonnement incident avec un angle d'incidence donné est réfléchi avec un angle de réflexion égal à l'angle d'incidence,

ledit élément en couches étant également **caractérisé en ce que** la surface de l'élément en couches (1) est divisée en une pluralité de pixels de même dimension, chaque pixel ayant au moins un côté de longueur inférieure ou égale à 500 $\mu$m, de préférence inférieure ou égale à 200 $\mu$m, la texture de chaque surface de contact texturée au sein de chaque pixel présentant une distribution des pentes $f_{pix}(\theta_x, \theta_y)$ ayant un coefficient de corrélation r avec la distribution des pentes $f_{tot}(\theta_x, \theta_y)$ de la texture de la surface de contact texturée totale, l'élément en couches étant tel que, pour un échantillon de N pixels, la moyenne des coefficients de corrélation $r$ ($f_{pix}$, $f_{tot}$) de chaque pixel de l'échantillon est supérieure ou égale à 0,8,

le coefficient de corrélation r étant défini par la relation suivante :

$$r = \frac{\int_{\theta_x} \int_{\theta_y} [f_{pix}(\theta_x, \theta_y) - \overline{f_{pix}}][f_{tot}(\theta_x, \theta_y) - \overline{f_{tot}}]}{\sqrt{(\int_{\theta_x} \int_{\theta_y} [f_{pix}(\theta_x, \theta_y) - \overline{f_{pix}}]^2)(\int_{\theta_x} \int_{\theta_y} [f_{tot}(\theta_x, \theta_y) - \overline{f_{tot}}]^2)}}$$

où $\overline{f_{pix}}$ est la moyenne de la fonction $f_{pix}$ sur l'ensemble des pentes, et $\overline{f_{tot}}$ est la moyenne de la fonction $f_{tot}$ sur l'ensemble des pentes.

2. Elément en couches transparent selon la revendication 1, **caractérisé en ce que** l'élément en couches (1) est destiné à être utilisé par un observateur en s'étendant sensiblement parallèlement à un plan Oxy d'un référentiel (O, x, y, z), où l'axe Ox est selon une direction horizontale et l'axe Oy est selon une direction verticale pour l'observateur,

la texture de chacune desdites surfaces de contact texturées ($S_0$, $S_1$, ..., $S_k$) entre deux couches adjacentes de l'élément en couches où l'une des deux couches est une couche métallique, ou qui sont deux couches transparentes d'indices de réfraction différents, étant d'équation z = f(x, y) et présentant, en chaque point de coordonnées ($X_0$, $Y_0$) de la surface de contact, une première pente directionnelle $\theta_x$ et une deuxième pente

directionnelle $\theta_y$ telles que : $\theta_x(X_0, Y_0) = \arctan \frac{dz}{dx}\Big|_{X_0,Y_0}$ et $\theta_y(X_0, Y_0) = \arctan \frac{dz}{dy}\Big|_{X_0,Y_0}$ ,

la distribution des pentes de la texture de chacune desdites surfaces de contact texturées ($S_0$, $S_1$, ..., $S_k$), qui correspond à la fréquence de chaque couple de pentes ($\theta_x$, $\theta_y$), ne présentant pas de symétrie axiale selon au moins l'un des axes ($O\theta_x$, $O\theta_y$) d'un premier repère orthogonal (O, $\theta_x$, $\theta_y$) où O correspond au couple de pentes (0, 0), ou ne présentant pas de symétrie axiale selon au moins l'un des axes ($O\theta_x'$, $O\theta_y'$) d'un deuxième repère orthogonal (O, $\theta_x'$, $\theta_y'$) obtenu par rotation de 45° du premier repère orthogonal (O, $\theta_x$, $\theta_y$).

3. Elément en couches transparent selon la revendication 2, **caractérisé en ce que** la distribution des pentes de la texture de chacune desdites surfaces de contact texturées ($S_0$, $S_1$, ..., $S_k$), qui correspond à la fréquence de chaque couple de pentes ($\theta_x$, $\theta_y$), ne présente pas de symétrie axiale selon au moins l'un des axes d'un repère orthogonal centré en O.

4. Elément en couches transparent selon l'une quelconque des revendications 2 ou 3, **caractérisé en ce que** la distribution des pentes de la texture de chacune desdites surfaces de contact texturées ($S_0$, $S_1$, ..., $S_k$), qui correspond à la fréquence de chaque couple de pentes ($\theta_x$, $\theta_y$), présente, en dehors d'un éventuel pic centré en O, un unique pic non centré en O.

5. Elément en couches transparent selon l'une quelconque des revendications 2 ou 3, **caractérisé en ce que** la distribution des pentes de la texture de chacune desdites surfaces de contact texturées ($S_0$, $S_1$, ..., $S_k$), qui correspond à la fréquence de chaque couple de pentes ($\theta_x$, $\theta_y$), présente, en dehors d'un éventuel pic centré en O, au moins deux pics non centrés en O.

6. Elément en couches transparent selon la revendication 5, **caractérisé en ce que** tous les pics de la distribution des pentes de la texture de chacune desdites surfaces de contact texturées ($S_0$, $S_1$, ..., $S_k$) sont alignés le long d'un seul axe d'un repère orthogonal centré en O.

**7.** Elément en couches transparent selon la revendication 5, **caractérisé en ce que** la distribution des pentes de la texture de chacune desdites surfaces de contact texturées ($S_0$, $S_1$, ..., $S_k$), qui correspond à la fréquence de chaque couple de pentes ($\theta_x$, $\theta_y$), présente deux pics symétriques l'un de l'autre par rapport à l'un des axes d'un repère orthogonal centré en O.

**8.** Elément en couches transparent selon l'une quelconque des revendications 2 à 7, **caractérisé en ce que** la distribution des pentes de la texture de chacune desdites surfaces de contact texturées ($S_0$, $S_1$, ..., $S_k$), qui correspond à la fréquence de chaque couple de pentes ($\theta_x$, $\theta_y$), présente, en dehors d'un éventuel pic centré en O, au moins un pic non centré en O pour lequel le rapport d'aspect, qui est un rapport entre la largeur du pic selon l'axe $O\theta_x$ et la largeur du pic selon l'axe $O\theta_y$, est différent de 1.

**9.** Elément en couches transparent selon l'une quelconque des revendications précédentes, **caractérisé en ce que** la moyenne des coefficients de corrélation $r(f_{pix}, f_{tot})$ de chaque pixel de l'échantillon est supérieure ou égale à 0,9.

**10.** Elément en couches transparent selon l'une quelconque des revendications précédentes, **caractérisé en ce que** chaque pixel a au moins un côté de longueur inférieure ou égale à 150 $\mu$m, de préférence inférieure ou égale à 100 $\mu$m.

**11.** Elément en couches transparent selon l'une quelconque des revendications précédentes, **caractérisé en ce que** l'échantillon de N pixels est choisi parmi N+2 pixels, en retirant le pixel ayant le coefficient de corrélation le plus élevé et le pixel ayant le coefficient de corrélation le moins élevé.

**12.** Elément en couches transparent selon l'une quelconque des revendications précédentes, **caractérisé en ce que** l'élément en couches (1) est un film flexible.

**13.** Vitrage transparent (10), notamment écran de projection transparent, comprenant un élément en couches (1) selon l'une quelconque des revendications précédentes.

**14.** Vitrage transparent selon la revendication 13, **caractérisé en ce qu'**il comprend en outre au moins une couche additionnelle positionnée contre l'élément en couches, de préférence choisie parmi :

  - les substrats transparents choisis parmi les polymères, les verres ou les céramiques comprenant deux surfaces principales lisses,
  - les matériaux durcissables initialement dans un état visqueux, liquide ou pâteux adapté à des opérations de mise en forme, notamment une couche sol-gel,
  - les feuillets intercalaires à base de matériau polymère, notamment thermoformables ou sensibles à la pression.

**15.** Vitrage transparent selon l'une quelconque des revendications 13 ou 14, **caractérisé en ce qu'**il comprend au moins un revêtement antireflet (7) à l'interface entre l'air et le matériau constitutif de la couche formant une surface principale externe du vitrage destinée à être à l'opposé par rapport à un projecteur lors de la projection d'images sur le vitrage.

**Patentansprüche**

**1.** Element aus transparenten Schichten (1), umfassend:

  - zwei transparente äußere Schichten (2, 4), die im Wesentlichen denselben Brechungsindex (n2, n4) besitzen, wobei der Absolutwert der Differenz zwischen ihren Brechungsindizes bei 550 nm kleiner als oder gleich 0,15 ist, und die jeweils eine glatte äußere Hauptoberfläche (2A, 4A) besitzen, und
  - eine zentrale Schicht (3), die zwischen die äußeren Schichten (2, 4) eingeschoben ist, wobei die zentrale Schicht (3) mindestens eine transparente Schicht mit einem Brechungsindex (n3), der sich von dem der äußeren Schichten unterscheidet, oder eine Metallschicht vorweist,

    wobei alle Kontaktoberflächen ($S_0$, $S_1$, ..., $S_k$) zwischen zwei angrenzenden Schichten des Schichtelements (1), wobei eine der zwei Schichten eine Metallschicht ist, oder die zwei transparente Schichten mit unterschiedlichen Brechungsindizes sind, texturiert und parallel zueinander sind, wobei eine texturierte Oberfläche eine Oberfläche ist, für die die Oberflächeneigenschaften in einer Skala variieren, die größer als die Wellenlänge der Strahlung ist, die auf die Oberfläche einfällt,

**dadurch gekennzeichnet, dass** für eine Strahlung (Ri), die auf eine Seite des Schichtelements (1) einfällt, die diffuse Lichtreflexion des Schichtelements (1) mindestens ein Maximum in einer Richtung besitzt, die von der Richtung ($R_s$) der spiegelnden Reflexion verschieden ist, das heißt, dass die Verteilung der Steigungen der Textur jeder texturierten Kontaktoberfläche ($S_0$, $S_1$, ..., $S_k$), die der Häufigkeit jedes Steigungspaares ($\theta x$, $\theta y$) entspricht, mindestens einen nicht in O zentrierten Peak aufweist, wobei O dem Steigungspaar (0, 0) entspricht,

wobei die Reflexion als "diffus" bezeichnet wird, wenn eine einfallende Strahlung mit einem gegebenen Einfallswinkel in eine Vielzahl von Richtungen reflektiert wird, wobei die Reflexion als "spiegelnd" bezeichnet wird, wenn eine einfallende Strahlung mit einem gegebenen Einfallswinkel mit einem Reflexionswinkel reflektiert wird, der gleich dem Einfallswinkel ist,

wobei das Schichtelement auch **dadurch gekennzeichnet ist, dass** die Oberfläche des Schichtelements (1) in eine Vielzahl von Pixeln gleicher Abmessung unterteilt ist, wobei jedes Pixel mindestens eine Seite mit einer Länge von weniger als oder gleich 500 $\mu$m, vorzugsweise weniger als oder gleich 200 $\mu$m, besitzt, wobei die Textur jeder texturierten Kontaktoberfläche innerhalb jedes Pixels eine Verteilung der Steigungen $f_{pix}(\theta_x, 0_y)$ aufweist, die einen Korrelationskoeffizienten $r$ mit der Steigungsverteilung $f_{tot}(\theta_x, \theta_y)$ der Textur der totalen texturierten Kontaktoberfläche aufweist, wobei das Schichtelement so beschaffen ist, dass für eine Stichprobe von N Pixeln der Durchschnitt der Korrelationskoeffizienten $r$ ($f_{pix}$, $f_{tot}$) jedes Pixels der Stichprobe größer als oder gleich 0,8 ist,

wobei der Korrelationskoeffizient r durch die folgende Beziehung definiert ist:

$$r = \frac{\int_{\theta_x} \int_{\theta_y} \left[ f_{pix}(\theta_x, \theta_y) - \overline{f_{pix}} \right] \left[ f_{tot}(\theta_x, \theta_y) - \overline{f_{tot}} \right]}{\sqrt{(\int_{\theta_x} \int_{\theta_y} \left[ f_{pix}(\theta_x, \theta_y) - \overline{f_{pix}} \right]^2)(\int_{\theta_x} \int_{\theta_y} \left[ f_{tot}(\theta_x, \theta_y) - \overline{f_{tot}} \right]^2)}}$$

wobei $\overline{f_{pix}}$ der Durchschnitt der Funktion $f_{pix}$ der Gesamtheit der Steigungen ist, und $f_{tot}$ der Durchschnitt der Funktion *ftot* der Gesamtheit der Steigungen ist.

2. Transparentes Schichtelement nach Anspruch 1,
   **dadurch gekennzeichnet, dass** das Schichtelement (1) dazu bestimmt ist, durch einen Beobachter verwendet zu werden, indem es sich im Wesentlichen parallel zu einer Oxy-Ebene eines Bezugssystems (O, x, y, z) erstreckt, wobei die Ox-Achse entlang einer horizontalen Richtung und die Oy-Achse in einer für den Beobachter vertikalen Richtung verläuft,

   wobei die Textur jeder der texturierten Kontaktoberflächen ($S_0$, $S_1$, ..., $S_k$) zwischen zwei angrenzenden Schichten des Schichtelements, wobei eine der zwei Schichten eine Metallschicht ist, oder die zwei transparente Schichten mit unterschiedlichen Brechungsindizes sind, die Gleichung z = f(x, y) erfüllt und an jedem Koordinatenpunkt ($X_0$, $Y_0$) der Kontaktoberfläche eine erste Richtungsneigung $\theta_x$ und eine zweite Richtungsneigung $0_y$ aufweist, so dass:

$$\theta_x(X_0, Y_0) = \arctan \frac{dz}{dx}\Big|_{X_0, Y_0} \text{ et } \theta_y(X_0, Y_0) = \arctan \frac{dz}{dy}\Big|_{X_0, Y_0},$$

   wobei die Verteilung der Steigungen der Textur jeder der texturierten Kontaktoberflächen ($S_0$, $S_1$, ..., $S_k$), die der Häufigkeit jedes Steigungspaares ($\theta_x$, $\theta_y$) entspricht, keine Axialsymmetrie entlang mindestens einer der Achsen ($O\theta_x$, $O\theta_y$) eines ersten orthogonalen Koordinatensystems (O, $\theta_x$, $\theta_y$) ist, wobei O dem Steigungspaar (0, 0) entspricht, oder keine Achsensymmetrie entlang mindestens einer der Achsen ($O\theta_x'$, $O\theta_y'$) eines zweiten orthogonalen Koordinatensystems (O, $\theta_x'$, $\theta_y'$) aufweist, das durch Drehung des ersten orthogonalen Koordinatensystems (O, $\theta_x$, $\theta_y$) um 45° erhalten wird.

3. Transparentes Schichtelement nach Anspruch 2,
   **dadurch gekennzeichnet, dass** die Verteilung der Steigungen der Textur jeder der texturierten Kontaktoberflächen ($S_0$, $S_1$, ..., $S_k$), die der Häufigkeit jedes Steigungspaares ($\theta_x$, $\theta_y$) entspricht, keine axiale Symmetrie entlang mindestens einer der Achsen eines orthogonalen, in O zentrierten Koordinatensystems aufweist.

**4.** Transparentes Schichtelement nach einem der Ansprüche 2 oder 3, **dadurch gekennzeichnet, dass** die Verteilung der Steigungen der Textur jeder der texturierten Kontaktoberflächen ($S_0$, $S_1$, ..., $S_k$), die der Häufigkeit jedes Steigungspaares ($\theta_x$, $\theta_y$) entspricht, abgesehen von einem möglichen in O zentrierten Peak einen einzigen, nicht in O zentrierten Peak aufweist.

**5.** Transparentes Schichtelement nach einem der Ansprüche 2 oder 3, **dadurch gekennzeichnet, dass** die Verteilung der Steigungen der Textur jeder der texturierten Kontaktoberflächen ($S_0$, $S_1$, ..., $S_k$), die der Häufigkeit jedes Steigungspaares ($\theta_x$, $\theta_y$) entspricht, abgesehen von einem möglichen in O zentrierten Peak mindestens zwei nicht in O zentrierte Peaks aufweist.

**6.** Transparentes Schichtelement nach Anspruch 5,
**dadurch gekennzeichnet, dass** alle Peaks der Verteilung der Steigungen der Textur jeder der texturierten Kontaktoberflächen ($S_0$, $S_1$, ..., $S_k$) entlang einer einzigen Achse eines orthogonalen Koordinatensystems ausgerichtet sind, das in O zentriert ist.

**7.** Transparentes Schichtelement nach Anspruch 5,
**dadurch gekennzeichnet, dass** die Verteilung der Steigungen der Textur jeder der texturierten Kontaktoberflächen ($S_0$, $S_1$, ..., $S_k$), die der Häufigkeit jedes Steigungspaares ($\theta_x$, $\theta_y$) entspricht, zwei zueinander symmetrische Peaks relativ zu einer der Achsen eines orthogonalen, in O zentrierten Koordinatensystems aufweist.

**8.** Transparentes Schichtelement nach einem der Ansprüche 2 bis 7, **dadurch gekennzeichnet, dass** die Verteilung der Steigungen der Textur jeder der texturierten Kontaktoberflächen ($S_0$, $S_1$, ..., $S_k$), die der Frequenz jedes Steigungspaares ($\theta_x$, $\theta_y$) entspricht, abgesehen von einem möglichen in O zentrierten Peak mindestens einen nicht in O zentrierten Peak aufweist, für den das Aspektverhältnis, das ein Verhältnis zwischen der Breite des Peaks entlang der $O\theta_x$-Achse und der Breite des Peaks entlang der $O\theta_y$-Achse ist, sich von 1 unterscheidet.

**9.** Transparentes Schichtelement nach einem der vorstehenden Ansprüche, **dadurch gekennzeichnet, dass** der Durchschnitt der Korrelationskoeffizienten $r(f_{pix}, f_{tot})$ jedes Pixels der Stichprobe größer als oder gleich 0,9 ist.

**10.** Transparentes Schichtelement nach einem der vorstehenden Ansprüche, **dadurch gekennzeichnet, dass** jedes Pixel mindestens eine Seite mit einer Länge von weniger als oder gleich 150 $\mu$m, vorzugsweise weniger als oder gleich 100 $\mu$m, besitzt.

**11.** Transparentes Schichtelement nach einem der vorstehenden Ansprüche, **dadurch gekennzeichnet, dass** die Stichprobe von N Pixeln aus N+2 Pixeln ausgewählt ist, indem das Pixel, das den höchsten Korrelationskoeffizienten besitzt, und das Pixel, das den niedrigsten Korrelationskoeffizienten besitzt, entfernt werden.

**12.** Element aus transparenten Schichten nach einem der vorstehenden Ansprüche, **dadurch gekennzeichnet, dass** das Schichtelement (1) eine flexible Folie ist.

**13.** Transparente Verglasung (10), insbesondere ein transparenter Projektionsschirm, umfassend ein Schichtelement (1) nach einem der vorstehenden Ansprüche.

**14.** Transparente Verglasung nach Anspruch 13,
**dadurch gekennzeichnet, dass** sie ferner mindestens eine gegen das Schichtelement positionierte zusätzliche Schicht umfasst, vorzugsweise gewählt aus:

- transparenten Substraten, ausgewählt aus Polymeren, Gläsern oder Keramiken, umfassend zwei glatte Hauptoberflächen,
- aushärtbaren Materialien, die zunächst in einem zähflüssigen, flüssigen oder pastösen Zustand sind, die an Formgebungsvorgänge angepasst sind, insbesondere eine Sol-Gel-Schicht,
- Zwischenlagenblättern auf Basis von Polymermaterial, die insbesondere thermoformbar oder druckempfindlich sind.

**15.** Transparente Verglasung nach einem der Ansprüche 13 oder 14,
**dadurch gekennzeichnet, dass** sie mindestens eine Antireflexbeschichtung (7) an der Grenzfläche zwischen der Luft und dem Material umfasst, aus dem die Schicht besteht, die eine äußere Hauptoberfläche der Verglasung ausbildet, die dazu bestimmt ist, bei der Projektion von Bildern auf die Verglasung gegenüber relativ zu einem Projektor zu sein.

**Claims**

1. A transparent layered element (1) comprising:

   - two transparent external layers (2, 4) having substantially the same refractive index (n2, n4), the absolute value of the difference between their refractive indices at 550 nm is smaller than or equal to 0.15, and each having a smooth external main surface (2A, 4A), and
   - a central layer (3) intermediate between the external layers (2, 4), the central layer (3) including at least one transparent layer of refractive index (n3) different from that of the external layers or a metal layer,

   all the contact surfaces ($S_0$, $S_1$, ..., $S_k$) between two adjacent layers of the layered element (1), one of the two layers of which is a metal layer, or that are two transparent layers of different refractive indices, being textured and parallel to one another, a textured surface being a surface for which the surface properties vary on a scale larger than the wavelength of the radiation incident on the surface, **characterized in that**, for radiation (Ri) incident on one side of the layered element (1), the diffuse light reflection of the layered element (1) has at least one maximum in a direction different from the direction ($R_s$) of specular reflection, i.e., the slope distribution of the texture of each textured contact surface ($S_0$, $S_1$, ..., $S_k$) corresponding to the frequency of each pair of slopes ($\theta_x$, $\theta_y$) has at least one peak not centered on O, wherein O corresponds to the pair of slopes (0, 0),

   the reflection being said to be "diffuse" when radiation incident on the glazing with a given angle of incidence is reflected by the glazing in a plurality of directions, the reflection being said to be "specular" when radiation incident on the glazing with a given angle of incidence is reflected by the glazing with an angle of reflection equal to the angle of incidence, that the layered element being also **characterized in that** the surface of the layered element (1) is divided into a plurality of pixels of same size, each pixel having at least one side of length smaller than or equal to 500 $\mu$m, and preferably smaller than or equal to 200 $\mu$m, the texture of each textured contact surface within each pixel having a slope distribution $f_{pix}(\theta_x, \theta_y)$ having a correlation coefficient $r$ with the slope distribution $f_{tot}(\theta_x, \theta_y)$ of the texture of the total textured contact surface, the layered element being such that, for a sample of N pixels, the average of the correlation coefficients $r$ ($f_{pix}$, $f_{tot}$) of each pixel of the sample is higher than or equal to 0.8, the correlation coefficient $r$ is defined by the following relationship:

$$r = \frac{\int_{\theta_x} \int_{\theta_y} [f_{pix}(\theta_x, \theta_y) - \overline{f_{pix}}][f_{tot}(\theta_x, \theta_y) - \overline{f_{tot}}]}{\sqrt{(\int_{\theta_x} \int_{\theta_y} [f_{pix}(\theta_x, \theta_y) - \overline{f_{pix}}]^2)(\int_{\theta_x} \int_{\theta_y} [f_{tot}(\theta_x, \theta_y) - \overline{f_{tot}}]^2)}}$$

   where $\overline{f_{px}}$ is the average of the function $f_{pix}$ over all of the slopes, and $\overline{f_{tot}}$ is the average of the function $f_{tot}$ over all of the slopes.

2. The transparent layered element as claimed in claim 1, **characterized in that** the layered element (1) is intended to be used, by an observer, lying substantially parallel to a plane Oxy of a coordinate system (O, x, y, z) in which the axis Ox is in a horizontal direction and the axis Oy is in a vertical direction with respect to the observer,

   the texture of each of said textured contact surfaces ($S_0$, $S_1$, ..., $S_k$) between two adjacent layers of the layered element, one of the two layers of which is a metal layer, or that are two transparent layers of different refractive indices, being of equation z = f(x, y) and having, at each point of coordinates ($X_0$, $Y_0$) of the contact surface, a first directional slope $\theta_x$ and a second directional slope $\theta_y$ such that:

$$\theta_x(X_0, Y_0) = \arctan \frac{dz}{dx}\bigg|_{X_0, Y_0} \text{ and } \theta_y(X_0, Y_0) = \arctan \frac{dz}{dy}\bigg|_{X_0, Y_0},$$

the slope distribution of the texture of each of said textured contact surfaces ($S_0$, $S_1$, ..., $S_k$), which corresponds to the frequency of each pair of slopes ($\theta_x$, $\theta_y$), not having axial symmetry about at least one of the axes ($O\theta_x$, $O\theta_y$) of a first orthogonal coordinate system ($O$, $\theta_x$, $\theta_y$) where O corresponds to the pair of slopes (0, 0), or not having axial symmetry about at least one of the axes ($O\theta_x'$, $O\theta_y'$) of a second orthogonal coordinate system ($O$, $\theta_x'$, $\theta_y'$) obtained by rotating by 45° the first orthogonal coordinate system ($O$, $\theta_x$, $\theta_y$).

3. The transparent layered element as claimed in claim 2, **characterized in that** the slope distribution of the texture of each of said textured contact surfaces ($S_0$, $S_1$, ..., $S_k$), which corresponds to the frequency of each pair of slopes ($\theta_x$, $\theta_y$), does not have axial symmetry about at least one of the axes of an orthogonal coordinate system centered on O.

4. The transparent layered element as claimed in either one of claims 2 and 3, **characterized in that** the slope distribution of the texture of each of said textured contact surfaces ($S_0$, $S_1$, ..., $S_k$), which corresponds to the frequency of each pair of slopes ($\theta_x$, $\theta_y$), has, excluding a potential peak centered on O, a single peak not centered on O.

5. The transparent layered element as claimed in either one of claims 2 or 3, **characterized in that** the slope distribution of the texture of each of said textured contact surfaces ($S_0$, $S_1$, ..., $S_k$), which corresponds to the frequency of each pair of slopes ($\theta_x$, $\theta_y$), has, excluding a potential peak centered on O, at least two peaks not centered on O.

6. The transparent layered element as claimed in claim 5, **characterized in that** all the peaks of the slope distribution of the texture of each of said textured contact surfaces ($S_0$, $S_1$, ..., $S_k$) are aligned along a single axis of an orthogonal coordinate system centered on O.

7. The transparent layered element as claimed in claim 5, **characterized in that** the slope distribution of the texture of each of said textured contact surfaces ($S_0$, $S_1$, ..., $S_k$), which corresponds to the frequency of each pair of slopes ($\theta_x$, $\theta_y$), has two peaks that are symmetric to each other with respect to one of the axes of an orthogonal coordinate system centered on O.

8. The transparent layered element as claimed in any one of claims 2 to 7, **characterized in that** the slope distribution of the texture of each of said textured contact surfaces ($S_0$, $S_1$, ..., $S_k$), which corresponds to the frequency of each pair of slopes ($\theta_x$, $\theta_y$), has, excluding a potential peak centered on O, at least one peak not centered on O and for which the aspect ratio, which is a ratio between the width of the peak along the axis $O\theta_x$ and the width of the peak along the axis $O\theta_y$, is different from 1.

9. The transparent layered element as claimed in any one of the preceding claims, **characterized in that** the average of the correlation coefficients $r(f_{pix}, f_{tot})$ of each pixel of the sample is higher than or equal to 0.9.

10. The transparent layered element as claimed in any one of the preceding claims, **characterized in that** each pixel has at least one side of length smaller than or equal to 150 $\mu$m, and preferably smaller than or equal to 100 $\mu$m.

11. The transparent layered element as claimed in any one of the preceding claims, **characterized in that** the sample of N pixels is chosen from N+2 pixels, the pixel having the highest correlation coefficient and the pixel having the lowest correlation coefficient being removed.

12. The transparent layered element as claimed in any one of the preceding claims, **characterized in that** the layered element (1) is a flexible film.

13. A transparent glazing (10), in particular a transparent projection screen, comprising a layered element (1) as claimed in any one of the preceding claims.

14. The transparent glazing as claimed in claim 13, **characterized in that** it furthermore comprises at least one additional layer positioned against the layered element, preferably chosen from:

- transparent substrates chosen from polymers, glasses or ceramics comprising two smooth main surfaces,
- setable materials initially in a viscous, liquid or pasty state suitable for forming operations, in particular a sol-gel layer,
- polymer-based interlayer sheets, in particular thermoformable or pressure-sensitive interlayer sheets.

15. The transparent glazing as claimed in either one of claims 13 and 14, **characterized in that** it comprises at least one antireflection coating (7) at the interface between the air and the material from which the layer forming an external main surface of the glazing is made, said surface being intended to be opposite with respect to a projector during the projection of images onto the glazing.

R$_i$

R$_d$'

R$_s$

1'

4'A

$\alpha'_V = \alpha_s$

2'A

-P-

**Fig. 1 — Art antérieur**

y $\odot$ —→ x

z

4A

4

− n4 −

2B

S$_1$

4B

S$_0$

1

− n2 −

3

2

2A

P

**Fig. 2**

Fig. 2a

Fig. 2b

**Fig. 3**   P

**Fig. 4**   P

Surface topology (altitude in µm)

**Fig. 5a**

**Fig. 5b**

Surface topology (altitude in µm)

**Fig. 6a**

**Fig. 6b**

**Fig. 7a**

**Fig. 7b**

Fig. 8

Fig. 9

**Fig. 10**

**Fig. 11**

**Fig. 12**

## RÉFÉRENCES CITÉES DANS LA DESCRIPTION

**Documents brevets cités dans la description**

- WO 2013175129 A1
- US 20110310487 A